# EUROPEAN PATENT SPECIFICATION

(11) **EP 4 521 762 B1**
(45) Date of publication and mention of the grant of the patent: **01.07.2026**
(21) Application number: 23925047.5
(22) Date of filing: 04.12.2023
(51) Int. Cl.: H04N 23/57, H04N 5/262, H04N 23/61, H04N 23/611, H04N 23/63, H04N 23/60, H04N 23/667

(54) **PHOTOGRAPHING METHOD**
FOTOGRAFIEVERFAHREN
PROCÉDÉ DE PHOTOGRAPHIE

(30) Priority: 27.02.2023 CN 202310216815
(43) Date of publication of application: 12.03.2025
(73) Proprietor: Honor Device Co., Ltd., Shenzhen, Guangdong 518040 (CN)
(72) Inventor: DU, Yuanchao, Shenzhen, Guangdong 518040 (CN); XUAN, Xinsheng, Shenzhen, Guangdong 518040 (CN); ZHANG, Nong, Shenzhen, Guangdong 518040 (CN); ZHU, Shiyu, Shenzhen, Guangdong 518040 (CN); HOU, Weilong, Shenzhen, Guangdong 518040 (CN); ZHANG, Zuochao, Shenzhen, Guangdong 518040 (CN)
(74) Representative: Gill Jennings & Every LLP
(86) International application number: PCT/CN2023/136216
(87) International publication number: WO 2024/179101

(56) References cited:
- WO-A1-2015/179021
- WO-A1-2020/076292
- CN-A- 1 984 296
- CN-A- 108 153 900
- CN-A- 109 413 333
- CN-A- 110 401 766
- CN-A- 113 810 608
- CN-A- 114 827 342
- CN-A- 115 002 340
- CN-A- 117 119 285
- US-A1- 2009 087 099
- US-A1- 2010 020 224
- US-A1- 2015 350 559
- US-B1- 7 982 770

## Description

### TECHNICAL FIELD

This application relates to the field of terminals, and in particular, to a shooting method.

### BACKGROUND

In a shooting process, due to problems such as a human reaction delay and a transmission delay of an electronic device, a user often finds it difficult to shoot a highlight photo that meets the user's expectations. This greatly degrades shooting experience of the user.

WO 2015/179021 A1 discloses techniques provide a "best" picture taken within a few seconds of the moment when a capture command is received. Video is captured automatically and analyzed to see if there is an action scene or other motion content around the time of the capture command, and if the analysis reveals anything interesting, then the video clip is presented to the photographer. US 2009/087099 A1 discloses a face image processing method, including continuously inputting a human image including a face image, judging a state of a subject's face from the image, and automatically selecting an image including a suitable face image which matches the desires of the user. CN 113810608 A discloses a shooting method, wherein when a user shoots a video through the electronic equipment, and the user can preview the snapshot picture without interrupting current video shooting. WO 2020/076292 A1 discloses a mobile image capture device configured to provide a live video stream of a current field of view of the image capture system and, in response to a user input, perform a rewind operation to display images in reverse chronological order. CN 110401766 A discloses a photographing method, wherein the electronic device can simultaneously display a preview interface and a gallery application interface on the display screen, so that the user can take a photo while previewing the photograph during the photographing process.

### SUMMARY

This application provides a shooting method. According to the shooting method, an electronic device 100 may determine a most wonderful image from images in a period of time including a moment of a shooting operation, and then output the image as a photo. This embodies initiative of snapping by a user and ensures an effect and quality of a finally output photo, providing better shooting experience for the user. The invention is defined in the appended claims.

According to a first aspect, this application provides a shooting method. The method is applied to an electronic device, the electronic device includes a camera, and the method includes: starting a camera application; displaying a preview interface at a moment T1, where the preview interface includes a preview area and a thumbnail area, and an image captured by the camera in real time is displayed in the preview area; detecting a shooting operation at a moment T2, and displaying a thumbnail of a first photo in the thumbnail area in response to the shooting operation, where the first photo is obtained based on a first image, and the first image is an image captured by the camera after the moment T1 and before the moment T2; and displaying a thumbnail of a second photo in the thumbnail area in response to the shooting operation, where the second photo is obtained based on a second image, and the second image is an image captured by the camera at a moment that is after the moment T2 and that does not include the moment T2.

According to the method provided in the first aspect, when detecting a shooting operation of a user, the electronic device may first generate a photo and a thumbnail based on one frame of image before the shooting operation, and use the photo and the thumbnail as a photo and a thumbnail that are obtained through the shooting operation. Then, the electronic device may continue to obtain an image after the shooting operation, generate a photo and a thumbnail based on one frame of image after the shooting operation, and update the photo and the thumbnail that are obtained through the shooting operation of the user. In this way, the user can obtain different shooting experience.

In the first aspect, the first image is an image with a highest comprehensive score captured by the camera after the moment T1 and before the moment T2; a comprehensive score of an image is determined based on one or more of the following: a quantity, sizes, and/or positions of first objects, a completion degree of a first action, a quantity, sizes, and/or positions of human faces, a degree of a smile on a human face, an opening degree of an eye on a human face, definition, or exposure; and the second image is an image with a highest comprehensive score captured by the camera at a moment that is after the moment T2 and that does not include the moment T2.

According to the method provided in the first aspect, the electronic device may determine, based on the one or more items, a best frame in a period of time before the shooting operation and a best frame in a period of time after the shooting operation. When detecting the shooting operation, the electronic device may first generate a photo and a thumbnail based on the best frame before the shooting operation, and use the photo and the thumbnail as a photo and a thumbnail that are obtained through the shooting operation of the user. Then, the electronic device may continue to obtain an image after the shooting operation, generate a photo and a thumbnail based on the best frame after the shooting operation, and update the photo and the thumbnail that are obtained through the shooting operation of the user.

In this way, the electronic device may generate, when the shooting operation is performed, a highlight photo in time based on the determined best frame, and may update the shot photo after detecting a more wonderful image subsequently, so that a photo finally shot by the user is more wonderful.

In the first aspect, before the detecting a shooting operation at a moment T2, the method further includes: selecting a first best frame with a highest comprehensive score from images captured by the camera from a moment T3 to a moment T4, where the moment T3 and the moment T4 are after the moment T1 and before the moment T2, and the moment T3 and the moment T4 are determined after the moment T1 based on a time window of a fixed step size. The displaying a thumbnail of a first photo in the thumbnail area in response to the shooting operation, where the first photo is obtained based on a first image specifically includes: selecting, in response to the shooting operation, a second best frame with a highest comprehensive score from images captured by the camera from the moment T4 to the moment T2, and determining a frame with a higher comprehensive score from the first best frame and the second best frame as a first candidate frame, where the first image is the first candidate frame.

According to the method provided in the first aspect, after the camera application is started (in a scenario in which the manual snapping is enabled), the electronic device may evaluate, based on a time window of a fixed step size, an image captured by the camera, to determine a best frame in each window. After the shooting operation is detected, another best frame is determined based on existing images in a current window, and then a better frame is selected from two most recent best frames as a first candidate frame. Then, the electronic device may output the best first candidate frame before the shooting operation, for example, the first image, as a photo. The photo is used as a temporary photo shot based on the manual shooting operation of the user.

According to the method provided in the first aspect, after detecting the shooting operation, the electronic device may immediately determine a best image before the shooting operation, to obtain a temporary photo and thumbnail as soon as possible and provide more timely shooting feedback for the user.

With reference to the method provided in the first aspect, in some embodiments, before the displaying a thumbnail of a second photo in the thumbnail area, the method further includes: detecting a first operation performed on the thumbnail of the first photo; displaying a second interface in response to the first operation, where the second interface includes a third area, and the first photo is displayed in the third area; and replacing the displayed first photo with the second photo in the third area.

According to the method provided in the foregoing embodiments, after the photo and the thumbnail are generated based on the image before the shooting operation, and a user operation of viewing the photo by the user is detected, the electronic device may update the shot photo in a process of viewing the shot photo.

With reference to the method provided in the first aspect, in some embodiments, the method further includes: starting a gallery application, and displaying a third interface, where one or more images are displayed in the third interface, and the one or more images include a preview image of the second photo and do not include a preview image of the first photo.

According to the method provided in the foregoing embodiments, the electronic device may save only a finally shot photo, for example, the second photo, to reduce a waste of storage resources. When the user views the gallery, only the finally shot photo is displayed.

With reference to the method provided in the first aspect, in some embodiments, the preview interface further includes a second control, and the method further includes: detecting a user operation performed on the second control, and enabling a manual snapping function.

According to the method provided in the foregoing embodiments, the electronic device may set a feature switch, such as the second control, to control enabling of the manual snapping. When the user has a manual snapping requirement, the electronic device may enable the manual snapping based on an operation performed on the feature switch, and perform a subsequent operation of identifying a highlight image, and shooting and saving the highlight image. In this way, the electronic device can reduce power consumption.

With reference to the method provided in the first aspect, in some embodiments, the comprehensive score of the second image is higher than the comprehensive score of the first image, and a difference between the comprehensive score of the second image and the comprehensive score of the first image is greater than a first preset value.

According to the method provided in the foregoing embodiments, the electronic device 100 may focus more on an image before the shooting operation, so that a finally shot photo is more consistent with a shooting intention of the user. Only when the best frame after the shooting operation is far more wonderful than the best frame before the shooting operation, the electronic device 100 updates the shot photo to the best frame after the shooting operation.

With reference to the method provided in the first aspect, in some embodiments, the displaying a thumbnail of a second photo in the thumbnail area in response to the shooting operation, where the second photo is obtained based on a second image specifically includes: selecting a second candidate frame with a highest comprehensive score from images captured by the camera from the moment T2 to a moment T5; and determining that the comprehensive score of the second candidate frame is higher than that of the first candidate frame, where the second image is the second candidate frame.

According to the method provided in the foregoing embodiments, the electronic device may continue to obtain an image in a period of time after the shooting operation, and determine, according to a same method, a best frame in the period of time after the shooting operation, that is, a second candidate frame. Then, the electronic device may select a more wonderful image from the first candidate frame before the shooting operation and the second candidate frame after the shooting operation as a photo finally shot through the shooting operation of the user. This embodies initiative of snapping by the user and ensures an effect and quality of a finally output photo, providing better shooting experience for the user.

With reference to the method provided in the first aspect, in some embodiments, a time length corresponding to the moment T2 to the moment T5 is the same as or different from a time length corresponding to the moment T3 to the moment T4.

With reference to the method provided in the first aspect, in some embodiments, before the displaying a thumbnail of a first photo in the thumbnail area in response to the shooting operation, the method further includes: determining that a third image includes the first object, where the third image is an image displayed in the preview area when the electronic device detects the shooting operation.

According to the method provided in the foregoing embodiments, the electronic device may first determine, based on an image at a moment at which the shooting operation is performed, whether a target shooting scene is a preset typical scene including a specific object. When the image at the moment at which the shooting operation is performed includes the specific object, that is, the image at the moment at which the shooting operation is performed is an image in the typical scene, the electronic device may perform shooting output according to the method provided in the first aspect or any embodiment of the first aspect.

With reference to the method provided in the first aspect, in some embodiments, the method further includes: displaying a thumbnail of a fourth photo in the thumbnail area when the third image does not include the first object, where the fourth photo is obtained based on a fourth image, the fourth image is a convergence image closest to the third image, and the convergence image satisfies one or more of the following: automatic focus convergence, automatic exposure convergence, or automatic white balance convergence.

According to the method provided in the foregoing embodiments, when the image at the moment at which the shooting operation is performed does not include the specific object, that is, is an image in an atypical scene, the electronic device may obtain a convergence image with higher image quality at lower costs without a need to care about image content, to ensure timeliness of a shot photo, and reduce computing costs and power consumption.

With reference to the method provided in the first aspect, in some embodiments, that the first photo is obtained based on a first image specifically includes: obtaining a plurality of frames of images that are captured by the camera and that include the first image; and fusing the plurality of frames of images into a new image, where the first photo is obtained based on the new image.

According to the method provided in the foregoing embodiments, the electronic device may process a highlight image based on another image near a best frame (multi-frame fusion), to further improve quality of the highlight image, for example, color, brightness, and saturation.

With reference to the method provided in the first aspect, in some embodiments, before the obtaining a plurality of frames of images that are captured by the camera and that include the first image, the method further includes: starting a first shooting mode.

According to the method provided in the foregoing embodiments, the electronic device may determine, based on a shooting mode, whether multi-frame fusion needs to be performed. In some specific shooting modes, the electronic device may significantly improve quality of a finally output photo through the multi-frame fusion. In another scenario, quality improvement brought by multi-frame fusion is not obvious. In this case, the electronic device may not perform multi-frame fusion, to save resources and reduce power consumption.

With reference to the method provided in the first aspect, in some embodiments, the first shooting mode is a night mode.

According to the method provided in the foregoing embodiments, when shooting is performed in the night mode, the electronic device may perform multi-frame fusion, to significantly improve quality of a finally output photo.

According to a second aspect, this application provides an electronic device. The electronic device includes one or more processors and one or more memories, the one or more memories are coupled to the one or more processors, the one or more memories are configured to store computer program code, the computer program code includes computer instructions, and when the one or more processors execute the computer instructions, the electronic device is enabled to perform the method described in the first aspect or any possible implementation of the first aspect.

According to a third aspect, an embodiment of this application provides a chip system. The chip system is applied to an electronic device, the chip system includes one or more processors, and the processor is configured to invoke computer instructions to enable the electronic device to perform the method described in the first aspect or any possible implementation of the first aspect.

According to a fourth aspect, this application provides a computer-readable storage medium, including instructions. When the instructions are run on an electronic device, the electronic device is enabled to perform the method described in the first aspect or any possible implementation of the first aspect.

According to a fifth aspect, this application provides a computer program product including instructions. When the computer program product is run on an electronic device, the electronic device is enabled to perform the method described in the first aspect or any possible implementation of the first aspect.

It can be understood that the electronic device provided in the second aspect, the chip system provided in the third aspect, the computer storage medium provided in the fourth aspect, and the computer program product provided in the fifth aspect are all used to perform the method provided in this application. Therefore, for beneficial effects that can be achieved, refer to the beneficial effects in the corresponding method. Details are not described herein again.

### BRIEF DESCRIPTION OF DRAWINGS

FIG. 1 is a schematic diagram of setting a window and determining a best frame according to an embodiment of this application;
FIG. 2 is a schematic diagram of implementing manual snapping according to an embodiment of this application;
FIG. 3A is a diagram of a software architecture for implementing manual snapping according to an embodiment of this application;
FIG. 3B is a schematic diagram of a method for determining a highlight degree of an image according to an embodiment of this application;
FIG. 4A to FIG. 4C are a group of user interfaces for enabling manual snapping according to an embodiment of this application;
FIG. 5A to FIG. 5H are a group of user interfaces for implementing manual snapping according to an embodiment of this application;
FIG. 6A to FIG. 6D are another group of user interfaces for implementing manual snapping according to an embodiment of this application;
FIG. 7A to FIG. 7J are another group of user interfaces for implementing manual snapping according to an embodiment of this application;
FIG. 8 is a flowchart of obtaining a best frame in a window according to an embodiment of this application;
FIG. 9 is a flowchart of implementing manual snapping according to an embodiment of this application;
FIG. 10A to FIG. 10E are a group of user interfaces for enabling an automatic snapping function according to an embodiment of this application;
FIG. 11A to FIG. 11H are a group of user interfaces for implementing automatic snapping according to an embodiment of this application;
FIG. 12 is a schematic diagram of a system structure of an electronic device 100 according to an embodiment of this application; and
FIG. 13 is a schematic diagram of a structure of an electronic device 100 according to an embodiment of this application.

### DESCRIPTION OF EMBODIMENTS

Terms used in the following embodiments of this application are merely intended to describe particular embodiments, and are not intended to limit this application.

In a shooting process, due to a human reaction delay, a user often finds it difficult to shoot a highlight photo that meets the user's expectations.

For example, at a moment T1, a k^{th} frame of image may be displayed in a preview window of an electronic device 100. The electronic device 100 is an electronic device that has a camera and provides a shooting and display service, such as a smartphone or a tablet computer.

After seeing the k^{th} frame of image in the preview window of the electronic device 100, the user may determine that the image is wonderful. In this case, the user may determine to perform a shooting operation to shoot the k^{th} frame of image. An image that the user expects to shoot, for example, the k^{th} frame of image, may be referred to as a target image. However, due to a human reaction delay (including time required for completing the shooting operation), there is a delay when the electronic device 100 receives the shooting operation of the user. Consequently, what is finally obtained is an image after the target image, for example, a (k+n)^{th} frame of image, instead of the k^{th} frame of image that the user expects to shoot.

In particular, due to uncertainty of the human reaction delay and device jitter caused by a human motion in a tapping shooting action, the (k+n)^{th} frame of image is more likely to have ghosting, greatly affecting image quality of a finally shot photo, and affecting shooting experience of the user.

Not limited to the smartphone and the tablet computer, the electronic device 100 may alternatively be a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device 100 is not particularly limited in embodiments of this application.

In view of this, embodiments of this application provide a shooting method.

According to the shooting method provided in embodiments of this application, after the camera is started, the electronic device 100 may determine, based on a fixed step size, a time window that includes a fixed quantity of image sequences. For any window, the electronic device 100 may determine an image with a best comprehensive evaluation of image content and image quality from all images in the window as a best frame.

Indicators for evaluating image content include but are not limited to: whether a specific object is included, a size and a position of the object, whether a specific action is included, a completion degree of the specific action, a human face is included, a size and a position of the human face, and human face performance (whether an eye is open, whether there is a smile, or the like). The specific object (a first object) is, for example, a human, a cat, or a dog. The specific action is, for example, jumping, glancing back, or throwing an object. The specific object and the specific action are not limited in embodiments of this application. Indicators for evaluating image quality include but are not limited to: definition, exposure, and the like.

When detecting a shooting operation of the user, the electronic device 100 may first determine a best frame from obtained images in a current window. Subsequently, the electronic device 100 may select a frame with a better comprehensive evaluation from two most recently determined best frames as a first candidate frame. In addition, the electronic device 100 may continue to obtain an image in a period of time after the shooting operation, and determine, according to a same method, a best frame in the period of time after the shooting operation as a second candidate frame. Finally, the electronic device 100 may select a frame with a better comprehensive evaluation from the first candidate frame and the second candidate frame, and output the frame as a photo.

The foregoing shooting method of selecting, according to a shooting operation of a user, an image with a better comprehensive evaluation from images in a period of time including a moment of the shooting operation, and outputting the image as a photo may be referred to as manual snapping. This embodies initiative of snapping by the user and ensures an effect and quality of a finally output photo, providing better shooting experience for the user.

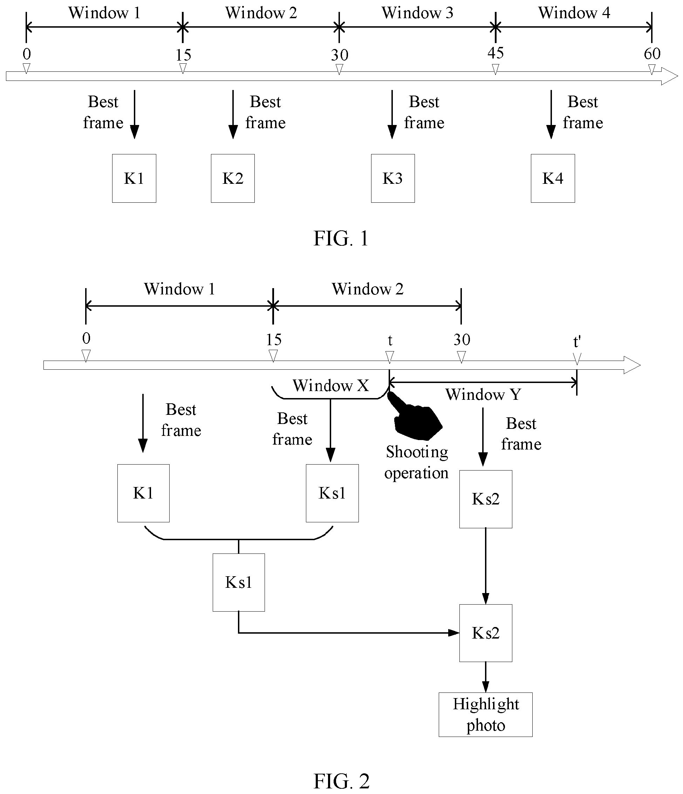

FIG. 1 is a schematic diagram of setting a window and determining a best frame according to an embodiment of this application.

After manual snapping is enabled, the electronic device 100 may determine, based on a fixed step size, a time window that includes a fixed image sequence. For example, the fixed step size may be set to 15 (frames), that is, a time range corresponding to every 15 consecutive frames of images may be referred to as a time window, which is briefly referred to as a window.

As shown in FIG. 1, a time range corresponding to a 1^{st} frame of image to a 15^{th} frame of image may be referred to as a window 1, a time range corresponding to a 16^{th} frame of image to a 30^{th} frame of image may be referred to as a window 2, a time range corresponding to a 31^{st} frame of image to a 45^{th} frame of image may be referred to as a window 3, a time range corresponding to a 46^{th} frame of image to a 60^{th} frame of image may be referred to as a window 4, and so on. As images are continuously generated, the electronic device 100 may determine more windows. Examples are not enumerated herein.

After obtaining any frame of image, the electronic device 100 may input the image into preset algorithms used to obtain image content and image quality, and obtain a comprehensive score indicating a comprehensive evaluation of the image content and the image quality. A process in which the electronic device 100 obtains a comprehensive score by using the preset algorithm is described in detail in a subsequent embodiment, and details are not described first herein.

After comprehensive scores of all images in a window are determined, the electronic device 100 may determine, based on the comprehensive scores of the images, an image with a highest comprehensive score from all the images in the window as a best frame in the window.

For example, the 10^{th} frame of image in the window 1 may be an image with a highest comprehensive score in the window 1. In this case, the electronic device 100 may determine the 10^{th} frame of image as a best frame in the window 1, which is denoted as K1. Similarly, the electronic device 100 may sequentially determine best frames in the window 2 to the window 4, which are denoted as K2 to K4 respectively.

FIG. 2 is a schematic diagram of implementing manual snapping according to an embodiment of this application.

First, in a scenario in which a window ends and a shooting operation of a user is not detected, the electronic device 100 may determine a best frame in the window after the window ends according to the method shown in FIG. 1. For example, the electronic device 100 may determine the best frame K1 (a first best frame) in the window 1. A start moment of the window 1 may be referred to as a moment T3, and an end moment of the window 1 may be referred to as a moment T4.

The user may perform a shooting operation at any moment. The electronic device 100 may detect, in real time, whether the user performs a shooting operation. In other words, the electronic device 100 may detect a shooting operation performed by the user at any moment. For example, as shown in FIG. 2, the electronic device 100 may detect, at a moment t, a shooting operation performed by the user. The moment t is in the window 2.

In response to the foregoing operation, the electronic device 100 may first obtain, from a window X, a best frame in the window X, which is denoted as Ks1. The window X is a time range corresponding to obtained images in the current window 2. Generally, a step size of the window X is less than the foregoing preset fixed step size.

For example, the moment t (a moment T2) corresponds to the 24^{th} frame of image (a third image), and the window X is a time range corresponding to the 16^{th} frame of image to the 24^{th} frame of image. In this case, the electronic device 100 may determine, from the 16^{th} frame of image to the 24^{th} frame of image, an image with a highest comprehensive score, for example, the 18^{th} frame of image, as the best frame Ks1 (a second best frame) in the window X.

In this case, K1 and Ks1 are two best frames most recently determined by the electronic device 100 when the shooting operation is detected. Then, the electronic device 100 may select a frame with a better comprehensive evaluation (that is, a frame with a higher comprehensive score) from the two best frames as a first candidate frame. For example, as shown in FIG. 2, the electronic device 100 may determine the best frame Ks1 with a higher comprehensive score as a first candidate frame. The first candidate frame Ks1 may be referred to as a first image. A time range corresponding to the window 1 and the window X may be referred to as a first time range.

After detecting the shooting operation, the electronic device 100 may continue to obtain images in a period of time after the shooting operation. As shown in FIG. 2, the electronic device 100 may continue to obtain images from the moment t to a moment t', t-t' may be referred to as a window Y, and the moment t' is also referred to as a moment T5. A step size of the window Y may be the same as or different from the preset fixed step size. This is not limited in embodiments of this application. A time range corresponding to the window Y may be referred to as a second time range.

Then, the electronic device 100 may determine, from the window Y with reference to the foregoing described method for determining a best frame, a best frame in the window Y, which is denoted as Ks2. Ks2 is a second candidate frame of the current shooting operation. The second candidate frame Ks2 may be referred to as a second image.

After determining the first candidate frame Ks1 before the shooting operation (including a sending moment of the shooting operation) and the second candidate frame Ks2 after the shooting operation, the electronic device 100 may select an image with a higher comprehensive score from the first candidate frame Ks1 and the second candidate frame Ks2 as a highlight image. For example, the electronic device 100 may determine Ks2 with a higher comprehensive score as a highlight image. Finally, the electronic device 100 may perform photo shooting processing on the highlight image Ks2, to obtain a corresponding highlight photo.

In some embodiments, when comparing the first candidate frame with the second candidate frame, the electronic device 100 may determine the second candidate frame as a highlight image after determining that the second candidate frame is higher than the first candidate frame and is higher than a preset value. The preset value is referred to as a first preset value. In this way, the electronic device 100 may focus more on an image before the shooting operation, to be closer to a shooting intention of the user.

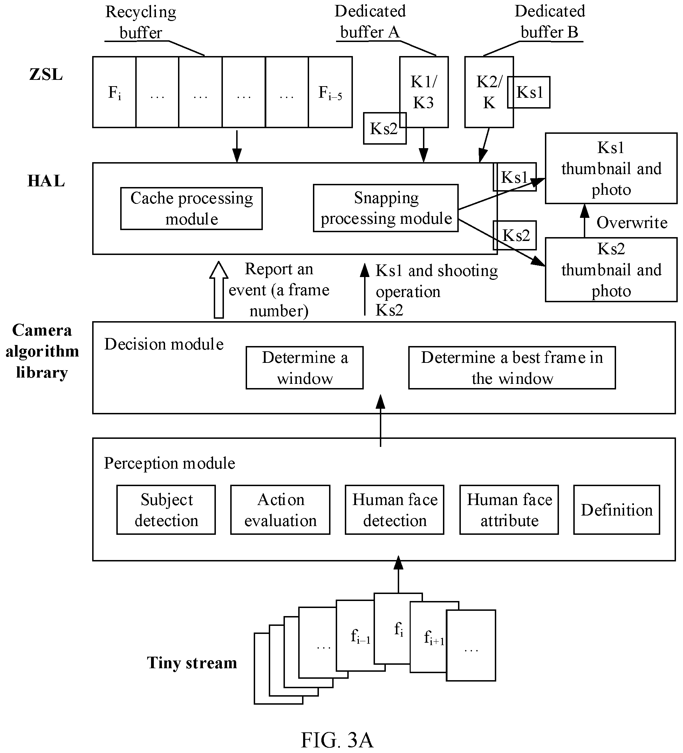

FIG. 3A is a diagram of a software architecture for implementing manual snapping according to an embodiment of this application.

A camera is disposed in an electronic device 100. An image obtained after a photosensitive element in the camera converts a captured light source signal into an electrical signal may be referred to as an original image, and is also referred to as a RAW image. The foregoing process is also referred to as that the camera captures an image. A process in which the camera sends the captured image to a functional module in a system structure of the electronic device 100 may be referred to as reporting. A process in which a module responsible for shooting and outputting a photo (for example, a snapping processing module shown in FIG. 3A) processes the image reported by the camera, and then outputs the image as a photo or another image resource and saves the photo or the another image resource may be referred to as shooting.

In a framework of zero shutter lag (zero shutter lag, ZSL), a recycling buffer is disposed in the electronic device 100. The buffer is configured to store a group of most recent RAW images reported by the camera. For example, a size of the recycling buffer is 6, that is, six most recent frames of RAW images reported by the camera may be stored, denoted as Fi-5 to Fi. After the camera reports an (i+1)^{th} frame of RAW image, the (i+1)^{th} frame of RAW image Fi+1 is written to the recycling buffer, and the image Fi-5 earliest written to the buffer is deleted. In this case, the images stored in the recycling buffer are updated to Fi-4 to Fi+1.

A smaller image may be obtained by downsampling a RAW image, and is referred to as a processing image (also referred to as a Tiny image). An image stream composed of consecutive Tiny images is referred to as a Tiny stream. The RAW image for downsampling may directly come from a RAW image reported by the camera, or may directly come from a RAW image stored in the recycling buffer. This is not limited in embodiments of this application. For example, a size of a RAW image may be 3024*4032 (p), and a size of an image obtained through downsampling in a Tiny stream may be 378*502 (p).

In some embodiments, an image in a Tiny stream may alternatively be extracted from RAW images reported by the camera or RAW images stored in the recycling buffer. For example, a group of RAW images reported by the camera or a group of RAW images stored in the recycling buffer includes a 1^{st} frame to a 20^{th} frame, and a module that performs downsampling to obtain a Tiny stream may extract one frame at an interval of three frames from the 1^{st} frame to the 20^{th} frame for downsampling, for example, the 1^{st} frame, the 5^{th} frame, and the 9^{th} frame, to generate corresponding Tiny images.

A Tiny image is aligned with a RAW image by frame number. For example, a frame number of an i^{th} frame of RAW image reported by the camera is i. A Tiny image obtained by downsampling the i^{th} frame of RAW image Fi is an i^{th} frame of Tiny image, which is denoted as fi. A frame number of fi is i.

Dedicated buffers are further disposed in the electronic device 100, including a dedicated buffer A and a dedicated buffer B. The dedicated buffers are configured to store a best frame in a RAW image format. Specifically, before a shooting operation performed by a user is detected, the dedicated buffer A and the dedicated buffer B alternately store a latest determined best frame. After the shooting operation performed by the user is detected, a best frame with a better comprehensive evaluation in the dedicated buffer A and the dedicated buffer B is retained, and a best frame with a poorer comprehensive evaluation is discarded. Subsequently, the electronic device 100 may write, to a dedicated buffer corresponding to the discarded best frame, a best frame in a period of time after the shooting operation, that is, a second candidate frame.

A perception module and a decision module are preconfigured in the electronic device 100. A plurality of detection algorithms are preset in the perception module, and are used to obtain various data indicating image content and image quality. The decision module may determine an image comprehensive score based on the data, and determine a best frame in each image sequence window according to the comprehensive score.

As shown in FIG. 3A, the perception module may include a subject detection algorithm, an action evaluation algorithm, a human face detection algorithm, a human face attribute algorithm, and a definition algorithm. The subject detection algorithm, the action evaluation algorithm, the human face detection algorithm, and the human face attribute algorithm may be used to obtain image content. The definition algorithm may be used to obtain image definition. In addition to definition, indicators for evaluating image quality may include another parameter such as exposure. These parameters may be directly obtained from data reported by the camera and/or another sensor, and in this case, the perception module may not include an algorithm for extracting the parameters from an image.

Specifically, the subject detection algorithm is used to obtain a shot object in an image, for example, a human, a face of a cat, or a dog. In particular, for shot objects other than a human, for example, the cat and the dog, the subject detection algorithm may further obtain local objects of these objects, for example, a face of the cat and a face of the dog. It can be understood that a specific type of the shot object is not limited in embodiments of this application.

After the preset shot object is identified, the subject detection algorithm may output an object box. Further, the object box marks a size and a position of the object in the image. In this case, the decision module may determine, according to whether the subject detection algorithm outputs an object box, whether the image includes a specific shot object. Further, the decision module may determine a quantity, sizes, and positions of objects based on a quantity, sizes, and positions of output object boxes, then evaluate the object, and determine an object score. For example, the larger the object box is and the more centered the position is, the higher the object score corresponding to the object box is.

The action evaluation algorithm is used to obtain an action of the shot object, such as jumping, glancing back, throwing an object, playing table tennis, playing badminton, running, splashing water, playing baseball, playing rugby, or playing Frisbee, determine a completion degree of the action in a current image based on a best completion point of the action, and then output an action score of the image. An image with a higher action completion degree corresponds to a higher action score.

For example, during a jump, a motion state in which the object reaches a highest point after leaving the ground may be referred to as a best completion point of the jump. When the object in an i^{th} frame of image is in a motion state of leaving the ground and reaching the highest point, the action evaluation algorithm may output a motion score of 1 (that is, a highest score) for the image. When the object in the image does not leave the ground or leaves the ground but does not reach the highest point, the action evaluation algorithm may output a motion score less than 1, such as 0.3 or 0.5, for the image. Specifically, the action evaluation algorithm may determine, based on a distance between the object and the highest point, motion scores of different moments at which the object leaves the ground but does not reach the highest point.

It can be understood that the best completion point of the action needs to be determined based on a motion track of the shot object in a period of time. Therefore, after a plurality of frames of images in a period of time (for example, one time window) are received, the action evaluation algorithm may first determine a best completion point in the plurality of frames of images, then evaluate motion states in the plurality of frames of images based on the best completion point, and output action scores of the plurality of frames of images.

In some embodiments, an action evaluation module may further identify an action of a non-human object, for example, a run or a jump of a cat or a dog.

The human face detection algorithm is used to obtain a human face in an image. After a human face is identified, the human face detection algorithm may output a human face box. The human face box marks a size and a position of the human face in the image. In this case, the decision module may determine, according to whether the human face detection algorithm outputs a human face box, whether the image includes a human face. Further, the decision module may evaluate the human face based on a quantity, sizes, and positions of output human face boxes, and output a human face score. For example, the larger the human face box is and the more centered the position is, the higher the human face score corresponding to the human face box is.

The human face attribute algorithm is used to obtain information about a human face in an image, for example, curvature of lips or a distance between upper and lower eyelids. The decision module may determine, based on the curvature of the lips or the distance between the upper and lower eyelids, whether there is a smile on the human face, an eye on the human face is open, or the like. Further, the decision module may determine a degree of the smile on the human face based on the curvature of the lips, and determine an opening degree of the eye on the human face based on the distance between the upper and lower eyelids. In this case, the decision module may evaluate human face performance based on the degree of the smile on the human face or the opening degree of the eye on the human face, and output a human face performance score.

In an implementation, when the curvature of the lips is larger, the degree of the smile on the human face is higher, and the human face performance score determined by the decision module is also higher. In an implementation, when the distance between the upper and lower eyelids is larger, the opening degree of the eye on the human face is higher, and the human face performance score determined by the decision module is also higher. When the two implementations are combined, weights of impact of eye opening and smiling on the human face performance score may be the same or different.

In an optional implementation, human face detection may be performed after a human is identified in subject detection. Similarly, the human face attribute algorithm may be executed after the human face detection algorithm identifies a human face. In this case, the human face detection algorithm may obtain a human face by using an image that includes a human and that is identified in the subject detection, and the human face attribute algorithm may obtain information about each human face by using a human face image output by the human face detection algorithm, to reduce computing costs and improve algorithm efficiency.

The definition algorithm is used to obtain image definition. Definition of a jitter-free and noise-free image is higher.

It can be understood that more detection algorithms may be preset in the perception module, to obtain more data indicating image content and image quality. This is not limited in embodiments of this application. Alternatively, the perception module may directly obtain information indicating image content and image quality, such as exposure, from data reported by the camera and/or another sensor. This is not limited in embodiments of this application.

The decision module may determine a comprehensive score of each frame of image based on various data that is output by the perception module and that indicates image content and image quality. The higher the comprehensive score is, the more wonderful the corresponding image is. After determining the comprehensive score of each frame of image, the decision module may determine a best frame in a window according to comprehensive scores of images in the window.

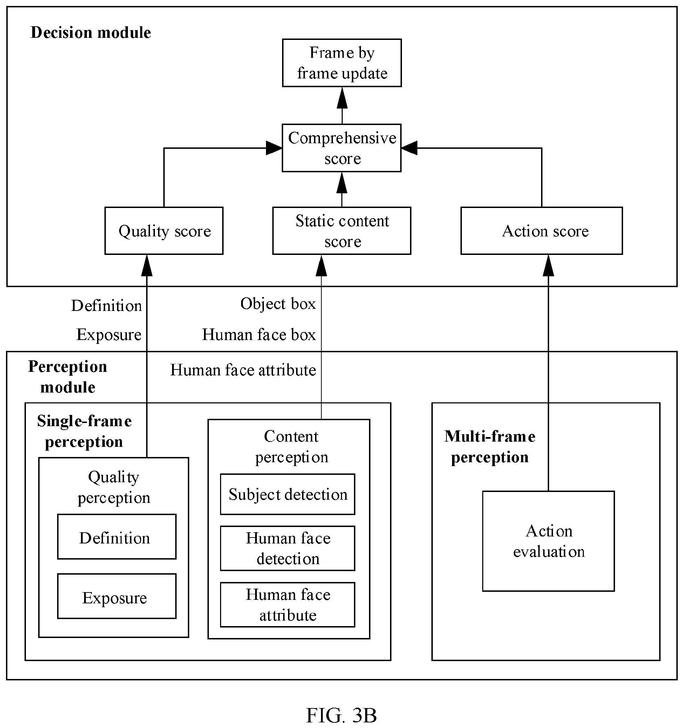

FIG. 3B is a schematic diagram of determining a comprehensive score of an image according to this application.

As shown in FIG. 3B, the perception module may include a single-frame perception module and a multi-frame perception module. The single-frame perception module may determine, by using one frame of image, one type of information of the image, for example, whether a specific object is included, whether a human face is included, an attribute of a human face, definition, or exposure. The single-frame perception module is applicable for obtaining one type of information, such as an action score, of one or more frames of images from a group of images.

In an implementation, the decision module may combine, according to image content and image quality, and single-frame and multi-frame, a plurality of types of information output by the perception module, to reduce a quantity of items, and then determine a final comprehensive score based on scores of items obtained after the reduction.

As shown in FIG. 3B, the decision module may fuse information that reflects image quality and that is output by a quality perception module, for example, definition and exposure, to obtain a quality score indicating image quality. The foregoing fusion is, for example, weighted averaging. The decision module may fuse an object box, a human face box, and an attribute of a human face that are output by a content perception module, to obtain a static content score indicating static image content. In this case, the decision module may obtain scores of three items: the quality score, the static content score, and the action score (that is, a dynamic content score).

The decision module may determine the static content score based on one or more of the object box, the human face box, and the attribute of the human face that are output by the content perception module. For example, the decision module may first determine a shot object in an image. When no specific object is identified, output results of the human face detection algorithm and the human face attribute algorithm are correspondingly null values. In this case, the decision module may determine that the static content score is 0 according to that a subject detection module does not output a valid object box. When a human face is identified, the decision module may determine the static content score based on an object box output by the subject detection module, a human face box output by a human face detection module, and/or an attribute of the human face (eye opening/smiling).

When the subject detection algorithm identifies that the image includes no human, for example, when the shot object is a cat or a dog, output results of the human face detection algorithm and the human face attribute algorithm are correspondingly null values. In this case, the decision module may determine the static content score based on an object box output by the subject detection module, without considering the output results of the human face detection algorithm and the human face attribute algorithm, to prevent a comprehensive score of the image from being reduced due to the null values of the human face detection algorithm and the human face attribute algorithm. Examples are not enumerated herein.

After the quality score, the static content score, and the action score are determined, the decision module may determine the comprehensive score based on one or more of the quality score, the static content score, and the action score.

For example, when no specific object and specific action are included in the image, both the static content score and the action score are 0 or invalid values. In this case, the decision module may determine the comprehensive score of the image only based on the quality score, to prevent the comprehensive score of the image from being reduced because the static content score and the action score are 0 or invalid values. For another example, when the image includes no specific object but includes no specific action, the action score is 0 or an invalid value. In this case, the decision module may determine the comprehensive score of the image only based on the quality score and the static content score, to prevent the comprehensive score of the image from being reduced because the action score is 0 or an invalid value.

Due to a difference between a content perception algorithm (the subject detection algorithm, the human face detection algorithm, or the human face attribute algorithm) and an action detection algorithm, in some embodiments, the action evaluation module may determine that a specific action is included in a group of images, and may determine action scores of the images based on completion degrees of the action in the images, but the content perception algorithm cannot identify a specific object and static performance of the specific object. In this case, the decision module may alternatively determine the comprehensive score of the image based on the quality score and the action score, to prevent the comprehensive score of the image from being reduced because the static content score is 0 or an invalid value.

A specific method for determining a comprehensive score (a highlight degree) of an image based on an output result of the perception module is not limited in embodiments of this application.

The electronic device 100 further includes a hardware abstract layer (hardware abstract layer, HAL). A cache processing module and the snapping processing module may be disposed in the HAL. The cache processing module may be configured to obtain a best frame in a RAW image format and write the best frame to a dedicated buffer. The snapping processing module is configured to determine a highlight image and output a photo.

An i^{th} frame of image is used as an example. An i^{th} frame of Tiny image fi obtained through downsampling may be first input into the perception module. Based on processing performed by each detection algorithm in the perception module and data reported by the camera and/or another sensor, the decision module may obtain various data indicating image content and image quality of fi, including an object box, a motion score, a human face box, a human face performance score, definition, exposure, and the like. Then, with reference to FIG. 3B, the decision module may determine a comprehensive score of fi based on the various data.

After comprehensive scores of all images in a window corresponding to fi are determined, the decision module may report an event of discovering a best frame to the HAL. The event may include a frame number of the best frame.

For example, fi is an image whose frame number is 10 (i=10) in a window 1. The window 1 further includes f1 to f9 and f11 to f15. For example, after a comprehensive score of f15 is determined, the electronic device 100 may determine that a comprehensive score of f10 is the highest in f1 to f15. In this case, the electronic device 100 may determine f10 as a best frame (K1) in the window 1. Then, the decision module may report an event of discovering the best frame to the HAL. In this case, the event includes the frame number 10.

After the event report by the decision module is received and the frame number is obtained, the cache processing module may obtain a RAW image corresponding to the frame number from the recycling buffer, and then write the RAW image to a dedicated buffer.

For example, after the frame number 10 is received, the cache processing module may obtain a RAW image F10 (that is, K1 in a RAW format) corresponding to the frame number 10 from the recycling buffer, and then write F10 to a dedicated buffer. Initially, both the dedicated buffer A and the dedicated buffer B are empty, and the cache processing module may write F10 to any one of the dedicated buffers. For example, the cache processing module may write F10 to the dedicated buffer A.

Similarly, after determining a best frame K2 in a window 2, the electronic device 100 may report an event of discovering the best frame to the HAL. In this case, the event may include a frame number of the best frame K2, for example, i=20. Then, the cache processing module may obtain a RAW image F20 (that is, K2 in a RAW format) corresponding to the frame number 20 from the recycling buffer. In this case, the cache processing module may write F20 to another dedicated buffer: the dedicated buffer B.

After a frame number (for example, i=35) of a best frame K3 in a window 3 reported by the electronic device 100 is received, the cache processing module may obtain a corresponding RAW image F35 from the recycling buffer. In this case, the cache processing module may write F35 to the dedicated buffer A, to replace the best frame F10 in the window 1 stored earlier. After a frame number (for example, i=50) of a best frame K4 in a window 4 reported by the electronic device 100 is received, the cache processing module may obtain a corresponding RAW image F50 from the recycling buffer. In this case, the cache processing module may write F50 to the dedicated buffer B, to replace the best frame F20 in the window 2 stored earlier.

Similarly, the dedicated buffer A and the dedicated buffer B alternately receive a latest best frame, so that two latest best frames are always cached.

At any moment, after the electronic device 100 detects a shooting operation of the user, the decision module may determine a latest best frame based on obtained images in a current window, and report the best frame to the HAL. Refer to the window X and the best frame Ks1 shown in FIG. 2. Details are not described herein again. Similarly, the cache processing module in the HAL may write a RAW format image of the latest best frame to an empty cache area or a dedicated buffer that caches an earlier best frame. For example, if K1 is cached in the dedicated buffer A, the cache processing module may write Ks1 to the dedicated buffer B.

In addition, the decision module may further report, to the HAL, indication information indicating that the shooting operation is detected. After the indication information is received, the snapping processing module may trigger snapping. Specifically, the snapping processing module may determine, from two latest best frames cached in the dedicated buffers, a best frame with a higher comprehensive score as a candidate frame. For example, the snapping processing module may determine, from K1 cached in the dedicated buffer A and Ks1 cached in the dedicated buffer B, Ks1 with a higher comprehensive score as a candidate frame (a first candidate frame). Then, the snapping processing module may process the first candidate frame Ks1 to output a photo. In a process of outputting the photo, the snapping processing module may simultaneously generate a corresponding thumbnail for previewing. In this case, the photo and the thumbnail that are obtained based on the first candidate frame Ks1 are temporary.

After reporting the latest best frame (Ks1) before the shooting operation and the indication information to the HAL, the decision module continues to obtain images in a period of time after the shooting operation, determines a best frame from the images, and then reports a best frame event to the HAL again. Refer to FIG. 2. The decision module continues to obtain images in the window Y, determines the best frame Ks2 (a second candidate frame) in the window Y, and then reports the best frame Ks2 to the HAL.

In this case, the cache processing module in the HAL may write a RAW format image of Ks2 to the dedicated buffer A that caches the non-candidate frame. Then, the snapping processing module may determine, from Ks2 cached in the dedicated buffer A and Ks1 cached in the dedicated buffer B, Ks2 with a higher comprehensive score as a highlight image. Subsequently, the snapping processing module may process the highlight image Ks2, and output images in photo formats to overwrite the temporary photo and thumbnail of Ks1 that are previously generated, and the images are used as a finally obtained photo and thumbnail of the shooting operation of the user.

It can be understood that when a comprehensive score of Ks2 is lower than that of Ks1, the snapping processing module does not need to perform snapping again. The determined photo and thumbnail of Ks1 are a photo and a thumbnail that are finally shot by the user.

Optionally, in a process of outputting a photo, the snapping processing module may further optimize the image by using another image processing algorithm, to obtain a photo with a better comprehensive evaluation, and improve shooting experience of the user. The image processing algorithm includes but is not limited to a saturation optimization algorithm, an exposure compensation algorithm, a face/body beautifying algorithm, and the like.

In some embodiments, when obtaining a RAW image of a best frame from the recycling buffer based on a frame number and writing the RAW image to a dedicated buffer, the cache processing module may alternatively obtain a plurality of frames of RAW images including the RAW image of the best frame from the recycling buffer, and write, to a dedicated buffer, a fusion image obtained by fusing the plurality of frames of RAW images, so as to further improve an effect and quality of a finally shot photo.

For example, the cache processing module may obtain, from the recycling buffer based on a received frame number i, a RAW image Fi of a best frame corresponding to the frame number i and RAW images before and after Fi, such as Fi-1 to Fi-3 and Fi+1. Optionally, the cache processing module may alternatively obtain only the RAW image Fi corresponding to the frame number i and a RAW image before Fi. Alternatively, the cache processing module may obtain only the RAW image Fi corresponding to the frame number i and a RAW image after Fi, or the like. A specific range of a plurality of frames of RAW images including a target RAW image is not specifically limited in embodiments of this application.

Fi-3 to Fi+1 are used as an example. The cache processing module may perform multi-frame fusion on Fi-3 to Fi+1, to obtain one frame of fusion image Fi-N. Then, the cache processing module may write the fusion image Fi-N to a dedicated buffer. Subsequently, the snapping processing module may output a photo and a thumbnail based on the fusion image.

Further, the cache processing module may determine, according to a shooting mode, to obtain one frame of RAW image or a plurality of frames of RAW images from the recycling buffer. For example, in a night mode, the cache processing module may obtain a plurality of frames of RAW images from the recycling buffer; or in a non-night mode, such as a portrait mode or a high dynamic mode, the cache processing module may obtain only one frame of RAW image from the recycling buffer.

Compared with directly inputting a RAW image into the perception module to obtain information such as image content and image quality, using a small-size Tiny image can greatly reduce computing costs of each detection algorithm in the perception module, improve a rate at which each detection algorithm outputs corresponding image content information, and effectively avoid problems of frame drops and stuttering.

Further, in an implementation, the electronic device 100 may simultaneously enable all detection algorithms, and set working frequencies of the detection algorithms to be the same as a frequency at which the camera reports images. For example, when each frame of Tiny image is received, the subject detection algorithm in the perception module may process the Tiny image to obtain a shot object in the Tiny image, the action evaluation algorithm may process the Tiny image to determine an action score of the Tiny image, and the human face detection algorithm, the human face attribute algorithm, and the definition algorithm each may process the Tiny image to obtain corresponding image content information.

In another implementation, the electronic device 100 may simultaneously enable all detection algorithms, but working frequencies of different detection algorithms are different. For example, the electronic device 100 may set a working frequency of the subject detection algorithm to be the same as a frequency at which the camera reports images, that is, the subject detection algorithm performs processing once per frame. The electronic device 100 may set a working frequency of the action evaluation algorithm to 1/4 of the frequency at which the camera reports images, that is, the action evaluation algorithm performs processing once every four frames. The electronic device 100 may set a working frequency of the human face detection algorithm to 1/2 of the frequency at which the camera reports images, that is, the action evaluation algorithm performs processing once every two frames. The electronic device 100 may set a working frequency of the definition algorithm to be the same as the frequency at which the camera reports images, and the like. Examples are not enumerated herein. In this way, the electronic device 100 can further reduce computing costs of the perception module and reduce power consumption.

In particular, in a scenario in which working frequencies of different detection algorithms are different, a detection algorithm that does not perform processing may output a result obtained in previous detection, to prevent a score of this item from being excessively low because detection is not performed, and avoid reducing stability and accuracy of detection of a magic moment.

In another implementation, the electronic device 100 may alternatively selectively enable a part of detection algorithms. Specifically, the electronic device 100 may determine, based on an object preset by the user and/or a motion state of an object, a detection algorithm that needs to be enabled. Other detection algorithms may be disabled. For example, when an object to be manually snapped set by the user includes only a cat or a dog, the electronic device 100 may disable the human face detection algorithm and the human face attribute algorithm.

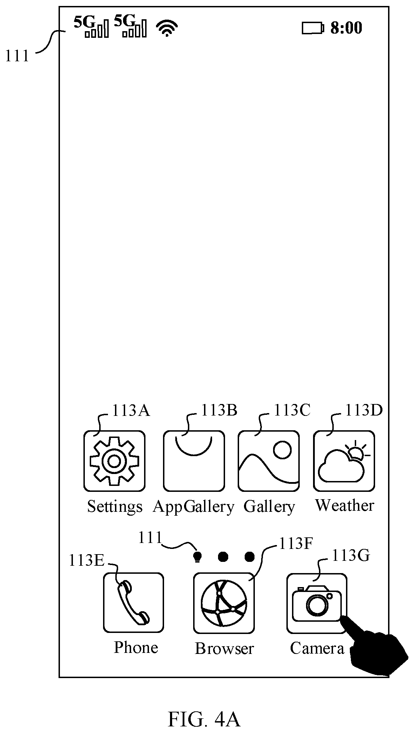

FIG. 4A to FIG. 4C are a group of user interfaces for enabling manual snapping according to an embodiment of this application.

FIG. 4A is a homepage (homepage) of an electronic device 100 according to an embodiment of this application. As shown in FIG. 4A, the homepage may include a status bar 111, a page indicator 112, and a plurality of application icons.

The status bar may include one or more signal strength indicators of a mobile communication signal (which may also be referred to as a cellular signal), a wireless fidelity (wireless fidelity, Wi-Fi) signal strength indicator, a battery status indicator, a time indicator, and the like.

The page indicator 112 may be configured to indicate a position relationship between a currently displayed page and another page.

The plurality of application icons may include a settings application icon 113A, an AppGallery application icon 113B, a gallery application icon 113C, a weather application icon 113D, a phone application icon 113E, a browser application icon 113F, a camera application icon 113G, and the like. In addition to the foregoing icons, the homepage may include another application icon. Examples are not enumerated herein. The plurality of application icons may be distributed on a plurality of pages. The page indicator 112 may be configured to indicate a specific page that a user is currently browsing in the plurality of pages hosting a plurality of applications. The user may browse another page by performing a touch operation of sliding leftward or rightward.

It can be understood that the user interface in FIG. 4A and in subsequent descriptions is merely an example of a possible user interface style of the electronic device 100 that uses a mobile phone as an example, and shall not constitute a limitation on embodiments of this application.

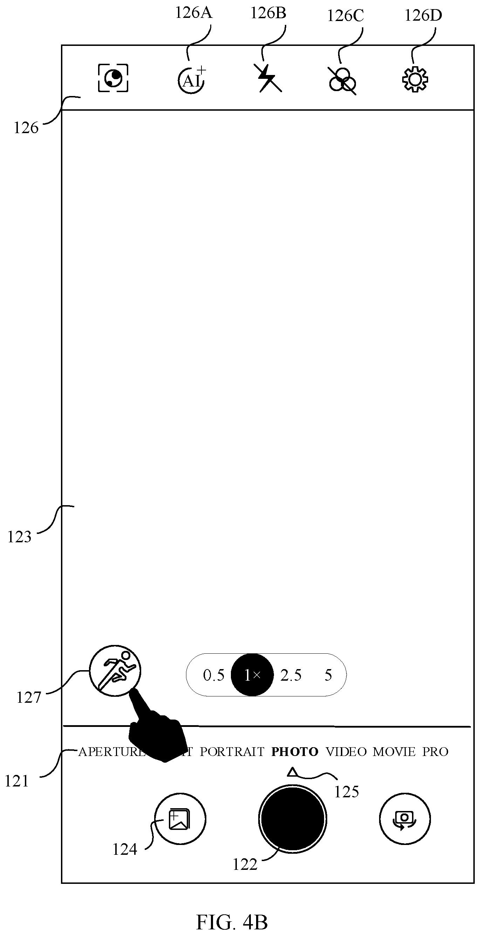

As shown in FIG. 4A, the electronic device 100 may detect a user operation performed by a user on the camera application icon 113G. In response to the foregoing operation, the electronic device 100 may start a camera application, and display a user interface of the camera application shown in FIG. 4B. FIG. 4B is a user interface of a shooting and display service provided by the camera application according to an embodiment of this application, and the user interface is also referred to as a preview interface.

As shown in FIG. 4B, the preview interface may include a mode bar 121, a shooting control 122, a preview window 123, and a playback control 124.

The mode bar 121 may include a plurality of shooting mode options, for example, "NIGHT", "PORTRAIT", "PHOTO", and "VIDEO". Different shooting modes may provide shooting services with different effects for the user. The user may select any one of a plurality of shooting modes according to different requirements to shoot. For example, "PHOTO" may be a default shooting mode, and is for shooting a photo. "VIDEO" is for recording a video. The "NIGHT" mode is applicable to a shooting scene with low light, such as night. The "PORTRAIT" mode is applicable to a shooting scene in which a subject to be shot is a human. The electronic device 100 may further provide more shooting modes, for example, "APERTURE", "MOVIE", and "PRO". Examples are not enumerated herein.

The electronic device 100 may detect a user operation performed on the mode bar 121, and change a currently used shooting mode based on the user operation. The user operation is, for example, a leftward/rightward sliding operation. For example, when it is detected that the mode bar 121 is dragged to slide leftward (a leftward sliding operation) and a floating icon 125 is made to stop at the "PORTRAIT" option, the electronic device 100 may switch to the "PORTRAIT" mode. By default, the electronic device 100 first uses the "PHOTO" mode.

The shooting control 122 is configured to trigger photo shooting. The electronic device 100 may detect whether there is a user operation, such as a tapping operation, that is performed on the shooting control 122. After detecting a user operation performed on the shooting control 122, the electronic device 100 may generate a photo shooting instruction. The electronic device 100 may obtain, based on the photo shooting instruction, an image reported by a camera at a corresponding timestamp, and then save the image as a photo. In conclusion, a user operation performed on the shooting control 122 is the shooting operation described in this application.

The preview window 123 may be configured to display, in real time, an image report by the camera. A display area corresponding to the preview window 123 may be referred to as a preview area. An area corresponding to the preview window 123 may be referred to as a preview area. In different shooting modes, the electronic device 100 may process an image reported by the camera, to improve a display effect of the image. For example, in the "PORTRAIT" mode, the electronic device 100 may blur a background in an image reported by the camera, to emphasize a portrait. Herein, the preview window 123 may display, in real time, images processed by image processing algorithms corresponding to different shooting modes, so that the user can perceive, in real time, shooting effects corresponding to the different shooting modes.

The playback control 124 may be used for viewing a thumbnail of a shot photo/video. A display area corresponding to the playback control 124 may be referred to as a thumbnail area. An area corresponding to the playback control 124 may be referred to as a thumbnail area. In this embodiment of this application, when detecting a shooting operation of tapping the shooting control 122 by the user, the electronic device 100 may first display, in the playback control 124, a thumbnail of a best frame that is determined before a moment at which the shooting operation is performed (including the moment at which the shooting operation is performed). After an image with a better comprehensive evaluation in a period of time after the shooting operation is obtained, the electronic device 100 may display a thumbnail of the image with the better comprehensive evaluation in the playback control 124. Conversely, if images in the period of time after the shooting operation are all poorer than the foregoing best frame, the thumbnail in the playback control 124 may remain unchanged.

Refer to FIG. 2. For example, when detecting the shooting operation, the electronic device 100 may first display a thumbnail of the best frame Ks1 in the playback control 124. If a comprehensive evaluation of the best frame Ks2 in the window Y is better than that of the best frame Ks1 before the shooting operation, the electronic device 100 may update the thumbnail of the best frame Ks1 originally displayed in the playback control 124 to a thumbnail of the best frame Ks2. Conversely, the thumbnail of the best frame Ks1 is kept displayed in the playback control 124, that is, a finally shot photo is Ks1.

The preview interface further includes a shortcut function area 126. As shown in FIG. 4B, the shortcut function area 126 may include a control 126A, a control 126B, a control 126C, and a control 126D. The control 126A may be configured to disable an AI photography function. AI photography is automatically identifying an object to be shot and performing different processing on different objects to output a photo or a video with a better effect. The control 126B may be configured to enable a flash. The control 126C may be configured to select a filter. The control 126D may be configured to obtain more functions.

In this embodiment of this application, the preview interface may further include a control 127. The control 127 may be configured to enable manual snapping. The control 127 may be referred to as a second control.

As shown in FIG. 4B, the electronic device 100 may detect a user operation performed on the control 127. In response to the foregoing operation, the electronic device 100 may enable a manual snapping function. After automatic snapping is enabled, when a shooting operation is detected, the electronic device 100 may obtain a most wonderful image in a period of time before and after the shooting operation and output the image as a photo according to the method shown in FIG. 1 and FIG. 2, to assist the user in shooting, so as to improve shooting experience of the user.

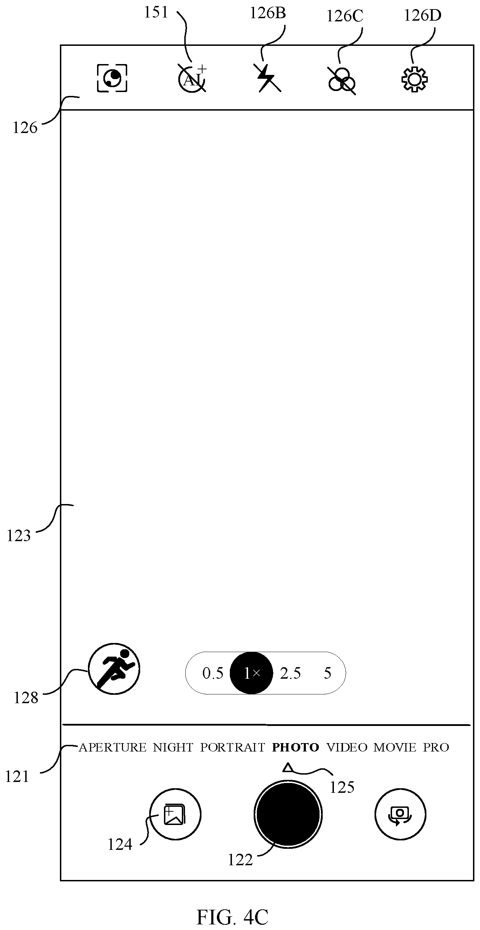

Correspondingly, after detecting that the manual snapping is enabled, the electronic device 100 may display a user interface (a first interface) shown in FIG. 4C. As shown in FIG. 4C, the electronic device 100 may display a control 128 to replace the control 127. The control 128 may be configured to disable the manual snapping. In addition, the control 128 may inform the user that the manual snapping is enabled.

In some embodiments, the manual snapping conflicts with another shooting function. In this case, only one of the conflicting functions can be enabled. For example, the manual snapping may conflict with the AI photography. In this case, the electronic device 100 does not support simultaneous enabling of the manual snapping and the AI photography. In a scenario in which the manual snapping is enabled, if a user operation of enabling the AI photography is detected, the electronic device 100 may enable the AI photography and disable the manual snapping. Conversely, in a scenario in which the AI photography is enabled, if a user operation of enabling the manual snapping is detected, the electronic device 100 may enable the manual snapping and disable the AI photography.

As shown in FIG. 4C, after the manual snapping is enabled, the electronic device 100 may display a control 151 to replace the original control 126A, to indicate that the AI photography function is disabled.

Another shooting function that does not conflict with the manual snapping may be enabled or disabled independently. For example, the user may enable the flash by using the control 126B and select a filter by using the control 126C at any time.

After the manual snapping is enabled, optionally, the electronic device 100 may detect a user operation performed on the control 128. In response to the foregoing operation, the electronic device 100 may disable the manual snapping. In this case, with reference to FIG. 4B, the electronic device 100 may redisplay the control 127 to replace the control 128, to enable the manual snapping again. Accordingly, the electronic device 100 may further redisplay the control 126A to replace the control 151, that is, re-enable the AI photography function previously disabled due to the conflict.

With the use of the control 127 and the control 128, the user may enable/disable the manual snapping at any time according to a requirement of the user. When the user needs assistance of the manual snapping to shoot a more wonderful photo, the electronic device 100 may provide the foregoing manual snapping service. When the user does not need the manual snapping, the electronic device 100 may disable the manual snapping, to reduce computing costs and power consumption, and improve use experience of the user.

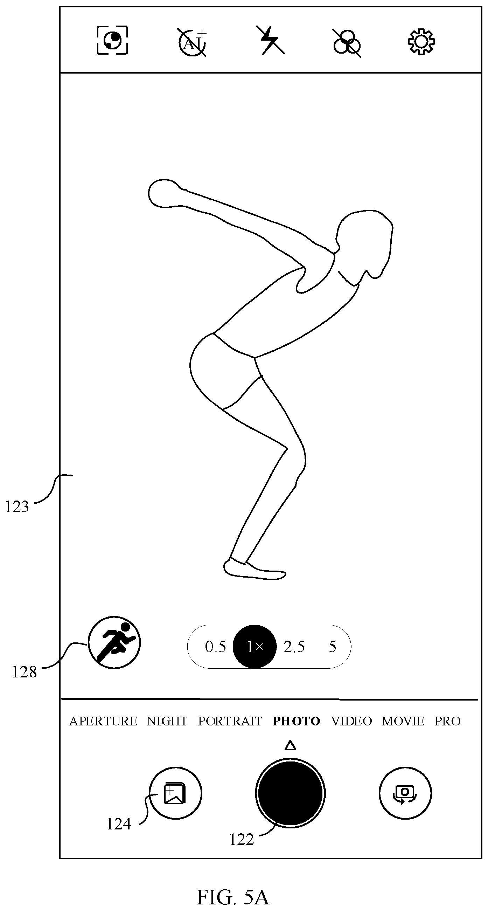

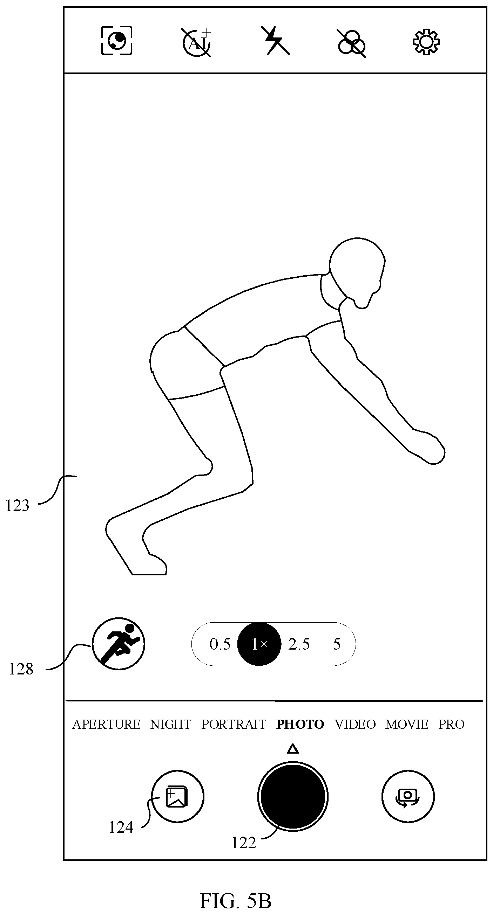

The electronic device 100 may shoot an athlete who is on a long jump. Refer to FIG. 5A to FIG. 5F. In a preview interface after the manual snapping is enabled, the preview window 123 may sequentially display motion states of the athlete shot by the camera at different moments in a long jump process.

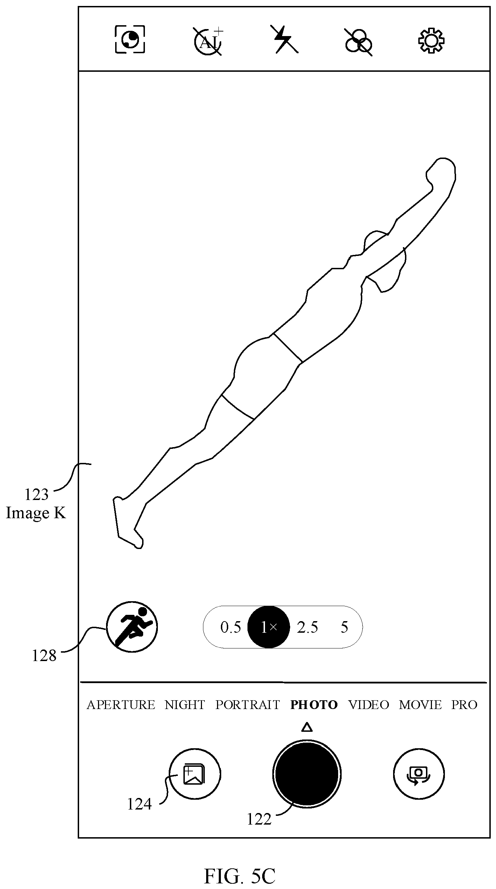

As shown in FIG. 5C, the preview window 123 of the electronic device 100 displays a frame of image of a state in which a human is in a flat-plate shape after takeoff, which is denoted as an image K. After seeing the image K, the user feels that the image is wonderful. In this case, the user may determine to tap the shooting control 122, to shoot a highlight photo like the image K. The image K is a target image.

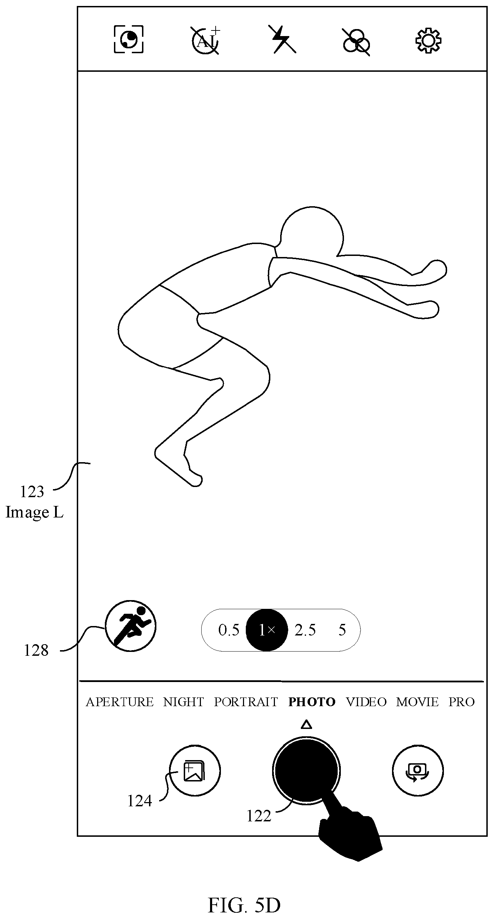

Due to a human reaction delay, the electronic device 100 usually cannot detect, at a moment at which the image K is displayed, an operation of tapping the shooting control 122 (that is, a shooting operation) by the user. As shown in FIG. 5D, the electronic device 100 may detect the shooting operation of the user when displaying an image L (a state in which the human curls and prepares to land after the takeoff). The image L is an image after the image K. In this case, in a conventional technology, the electronic device 100 outputs the image L as a shot photo. However, the image L is not a photo that the user expects to shoot, and may even have problems of jitter, ghosting, and the like, seriously affecting shooting experience of the user.

Refer to the descriptions of FIG. 1 and FIG. 2. In this embodiment of this application, after the manual snapping is enabled, the electronic device 100 may first determine, by using a window of a fixed step size as a unit, an image with a best comprehensive evaluation in each window as a best frame in the window. After detecting a shooting operation, the electronic device 100 may determine a best frame from the first frame of image in a current window to an image corresponding to a moment at which the shooting operation is performed (that is, obtained images in the current window). Then, the electronic device 100 may determine, from determined best frames in different windows (for example, K1 and Ks1), a best frame with a better comprehensive evaluation as a candidate frame, that is, a first candidate frame. Further, the electronic device 100 may generate a photo and a thumbnail based on the first candidate frame.

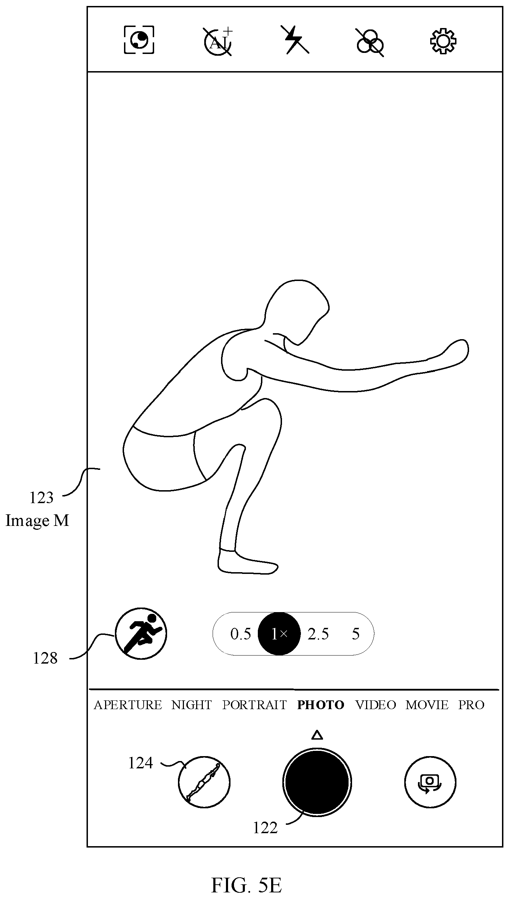

As shown in FIG. 5D, when detecting the shooting operation performed on the shooting control 122, the electronic device 100 may first determine a best frame, that is, the image K (a first image), in two most recent windows before the shooting operation (including the image L at a moment at which the shooting operation is performed). The electronic device 100 may generate a photo (a first photo) and a thumbnail that correspond to the image K. Refer to FIG. 5E. The electronic device 100 may first display the thumbnail of the image K in the playback control 124, to inform the user that a photo has been shot based on the shooting operation of the user.

It can be understood that a best frame determined by the electronic device 100 according to a preset algorithm is not necessarily a target image determined by the user. Because images in a short period are similar, the best frame determined by the electronic device 100 according to the preset algorithm is not very different from the target image determined by the user. Therefore, the best frame determined by the electronic device 100 according to the preset algorithm may be considered as the target image of the user.

In some embodiments, the electronic device 100 may alternatively determine an image frame corresponding to the moment at which the shooting operation is performed, for example, the image L shown in FIG. 5D, determine a thumbnail corresponding to the image frame, and then display the thumbnail of the image frame in the playback control 124.

The generated photo and thumbnail of the image K are temporary. In addition, after detecting the shooting operation, the electronic device 100 may continue to obtain images generated by the camera in a period of time after the shooting operation, for example, the window Y shown in FIG. 2. The electronic device 100 may determine a best frame, that is, a second candidate frame, from the images generated by the camera in the period of time after the shooting operation. If the second candidate frame is better than the first candidate frame, the electronic device 100 may generate a photo and a thumbnail based on the second candidate frame, and determine the photo and the thumbnail as a finally shot photo and thumbnail. The photo and the thumbnail that are generated based on the first candidate frame are overwritten. Conversely, if the second candidate frame is poorer than the first candidate frame, the photo and the thumbnail that are generated based on the first candidate frame are a finally shot photo and thumbnail.

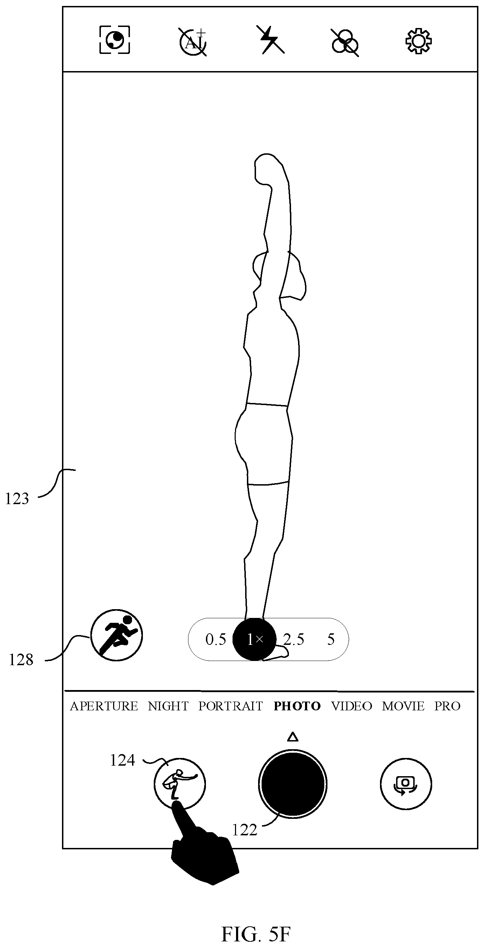

As shown in FIG. 5E, after the shooting operation is detected, the preview window 123 may display a latest image reported by the camera, that is, an image M (a second image). The image M is a best frame in a period of time after the shooting operation, that is, a second candidate frame. In this case, the electronic device 100 compares the image M with the image K. When determining that the image M is better than the image K, that is, a comprehensive score of the image M is higher than that of the image K, the electronic device 100 may generate a photo (a second photo) and a thumbnail based on the image M, to overwrite the photo and the thumbnail of the image K. In this case, the image M is a photo finally shot based on the shooting operation of the user. As shown in FIG. 5F, the electronic device 100 may display the thumbnail of the image M in the playback control 124, to overwrite the original thumbnail of the image K, so as to indicate that the photo shot by the user is updated.

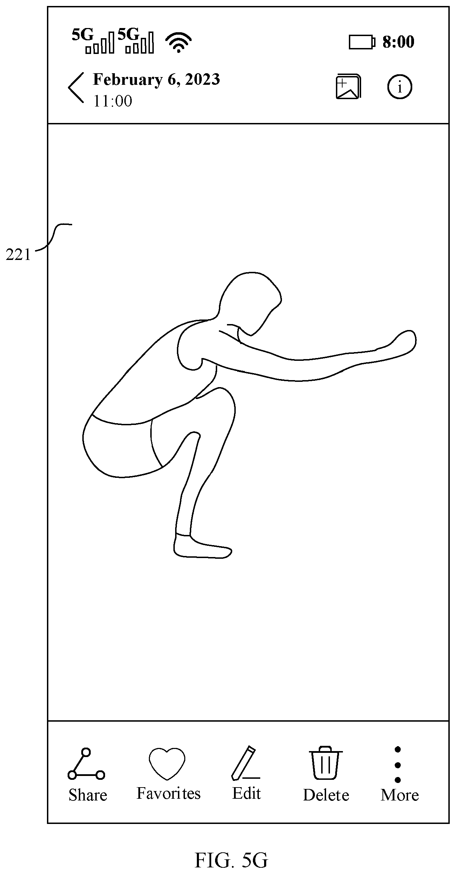

Refer to FIG. 5F. The electronic device 100 may detect a user operation performed on the playback control 124. In response to the foregoing operation, the electronic device 100 may display a user interface shown in FIG. 5G. The electronic device 100 may display, in an area 221, the photo (the image M) finally shot based on the shooting operation of the user.

Conversely, if the image M is poorer than the image K, that is, the comprehensive score of the image M is lower than that of the image K, the electronic device 100 may determine the photo obtained based on the image M as a finally shot photo, and the thumbnail of the image M as a thumbnail of the finally shot photo. In this case, the electronic device 100 does not need to update the thumbnail displayed in the playback control 124. Refer to FIG. 5E. The electronic device 100 may keep displaying the thumbnail of the image K in the playback control 124 until a new thumbnail is generated in next shooting. When a user operation performed on the playback control 124 in FIG. 5E is detected, in response to the foregoing operation, the electronic device 100 may display the photo (the image K) finally shot based on the shooting operation of the user. Refer to FIG. 5G. Details are not described herein again.

According to the manual snapping method shown in FIG. 5A to FIG. 5G, the electronic device 100 may obtain, based on a shooting operation of the user, all images generated by the camera in a period of time before and after the shooting operation, and then select an image with best quality from the images and output the image as a photo. Shooting a photo in this way embodies initiative of snapping by the user and ensures quality of a finally output photo, providing better shooting experience for the user.

An application, such as a gallery application, that provides a function for viewing a shot image resource (for example, a photo or a video) is installed on the electronic device 100. The user may view the shot image resource by using the application. In this embodiment of this application, after performing manual snapping, the electronic device 100 may display a finally determined photo only in the gallery application.

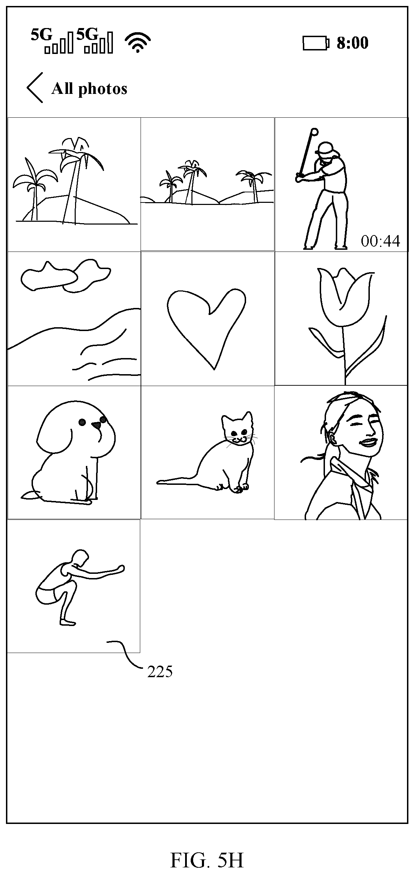

FIG. 5H is a user interface provided by the gallery application for previewing a shot image resource according to an embodiment of this application. As shown in FIG. 5H, the interface may display only a preview image 225 of the finally shot image M, and not display a preview image of the temporary image K shot before the shooting operation. The interface shown in FIG. 5H may be referred to as a third interface.

In some embodiments, after a thumbnail generated based on a candidate frame before the shooting operation (that is, the first candidate frame) is displayed in the playback control 124, the user immediately taps the playback control 124 to view the shot photo. In this case, the electronic device 100 has not obtained another candidate frame (that is, the second candidate frame) determined based on images in a period of time after the shooting operation.

In this case, the electronic device 100 may first display the photo generated based on the first candidate frame, and the electronic device 100 continues to obtain the second candidate frame. When the second candidate frame is better than the first candidate frame, the electronic device 100 may automatically display a photo of the second candidate frame, to replace the photo of the first candidate frame.

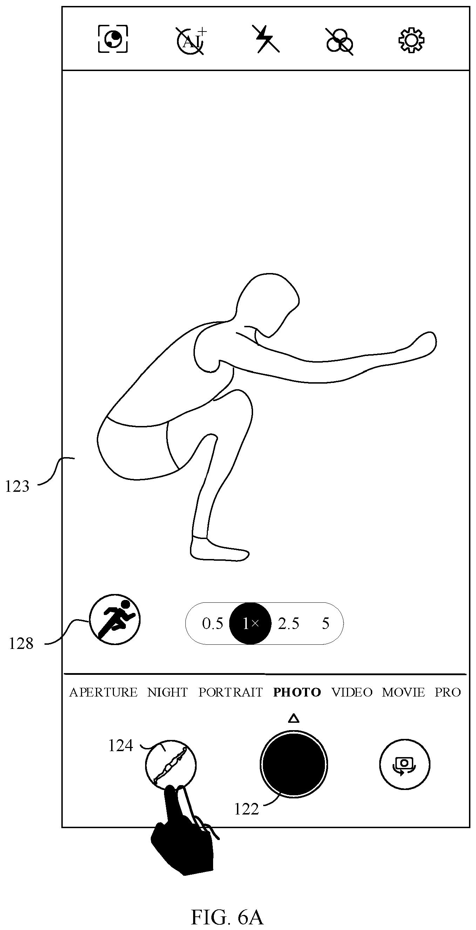

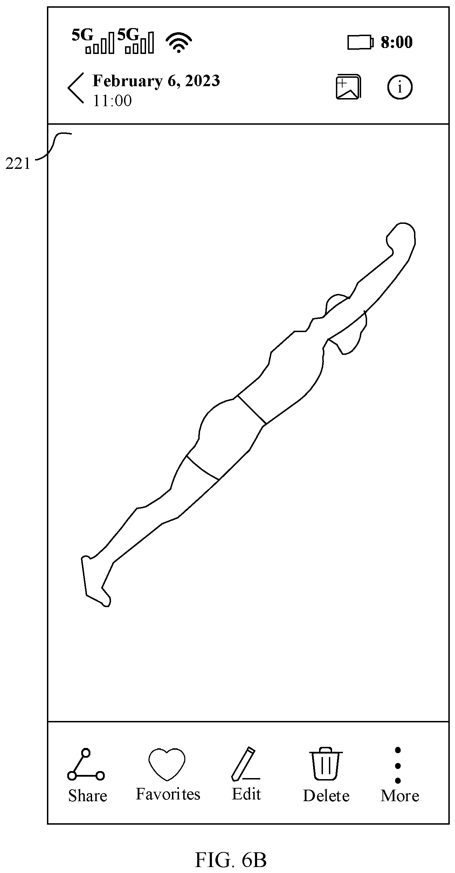

As shown in FIG. 5D and FIG. 5E, after detecting the shooting operation, the electronic device 100 may generate a photo and a thumbnail based on the first candidate frame before the shooting operation, that is, the image K. After the electronic device 100 displays the thumbnail of the image K in the playback control 124, with reference to FIG. 6A, the electronic device 100 may detect a user operation performed on the playback control 124. In response to the foregoing operation, the electronic device 100 may display a user interface (a second interface) shown in FIG. 6B. The electronic device 100 may first display, in an area 221 (a third area), the photo generated based on the first candidate frame, that is, the image K.

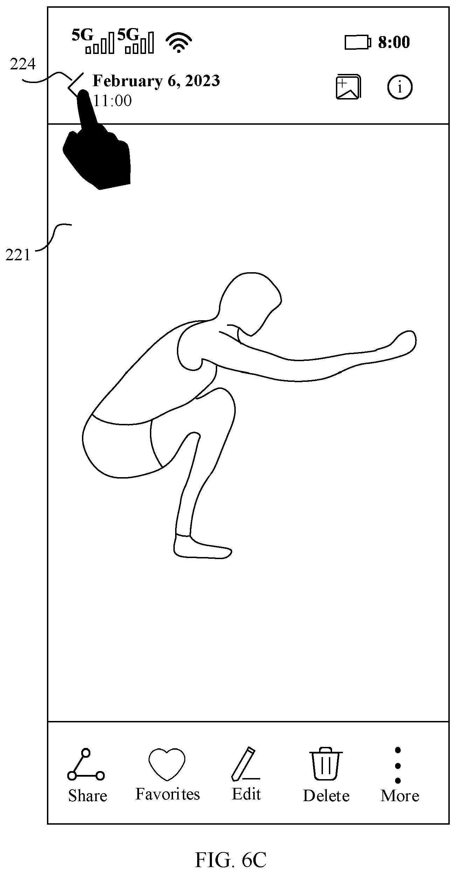

When displaying the interface shown in FIG. 6B, the electronic device 100 may obtain a best frame in the period of time after the shooting operation, that is, the second candidate frame, such as the image M. When it is determined that the image M is better than the candidate frame before the shooting operation, that is, the image K, a finally shot photo is the image M. Refer to FIG. 6C. The electronic device 100 may automatically display the image M in the area 221 to replace the image K. Conversely, if the image M is poorer than the image K, the photo and the thumbnail that are generated based on the image K are a finally shot photo and thumbnail. The photo shown in FIG. 6B is a finally shot photo and does not need to be updated.

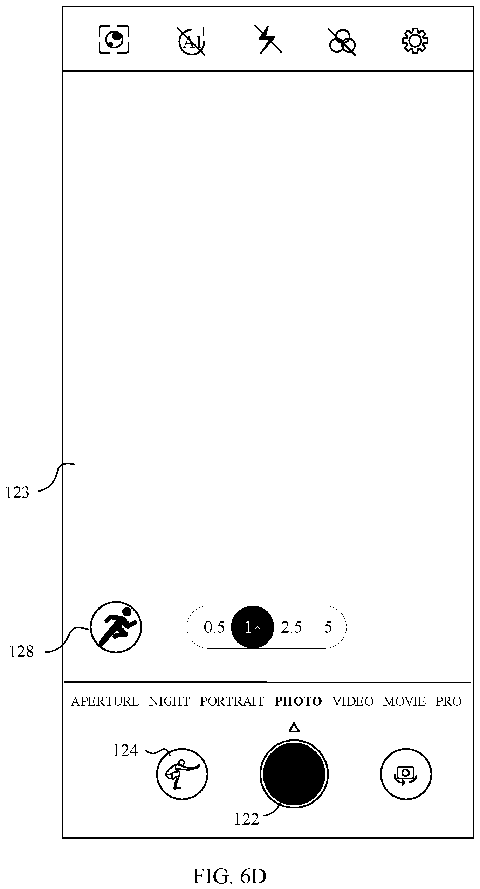

After the shot photo, that is, the image M is viewed, the electronic device 100 may detect a user operation performed on a control 224. In response to the foregoing operation, the electronic device 100 may redisplay a preview interface, as shown in FIG. 6D. In this case, the thumbnail displayed in the playback control 124 is correspondingly updated to the thumbnail of the image M.

According to the foregoing method, the electronic device 100 may provide feedback to the user immediately after detecting the shooting operation, to avoid affecting user experience.

In some embodiments, in the "VIDEO" mode, the electronic device 100 may perform manual snapping.

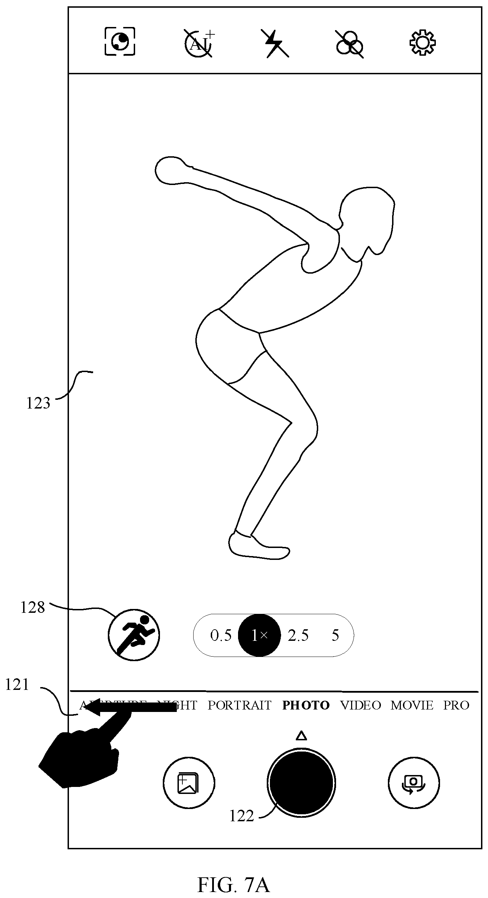

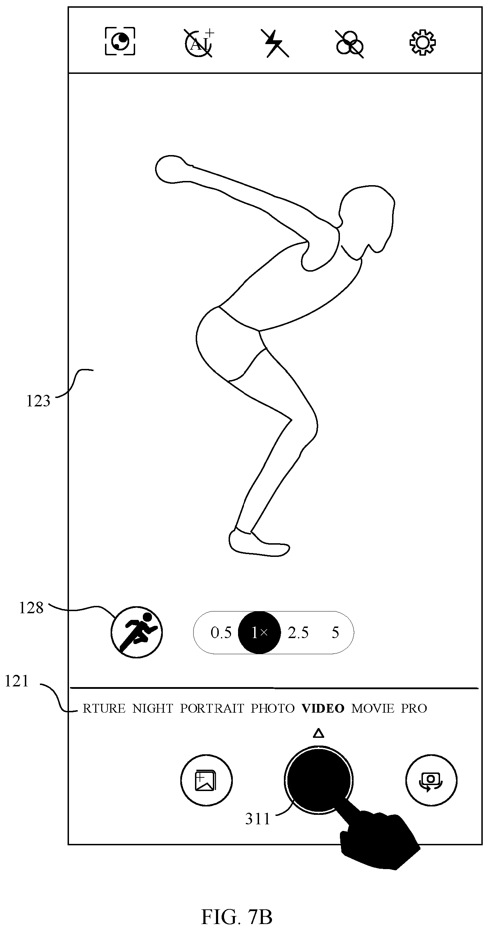

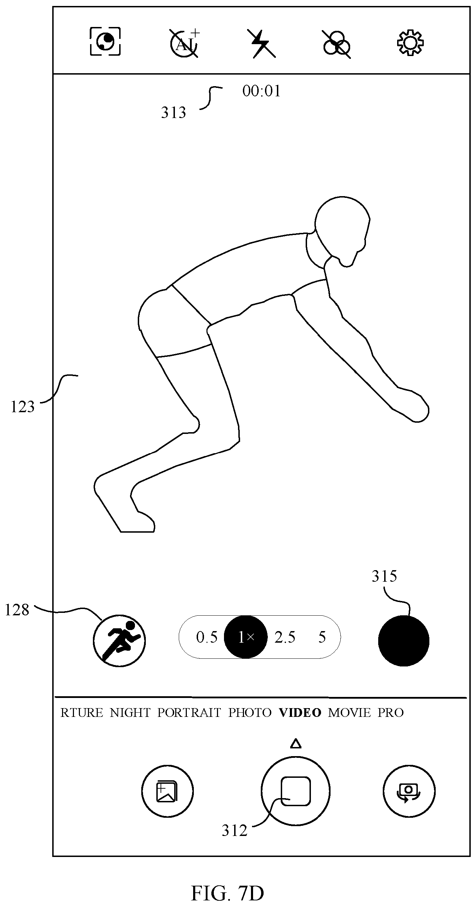

As shown in FIG. 7A, the electronic device 100 may detect a leftward sliding operation performed on the mode bar 121. In response to the foregoing operation, the electronic device 100 may switch from the "PHOTO" mode to the "VIDEO" mode, with reference to FIG. 7B. As shown in FIG. 7B, after entering the "VIDEO" mode, the electronic device 100 may change the original preview interface corresponding to the "PHOTO" mode to a preview interface corresponding to the "VIDEO" mode. Specifically, the electronic device 100 may change the original shooting control 122 in the "PHOTO" mode to a video recording start control 311 in the "VIDEO" mode.

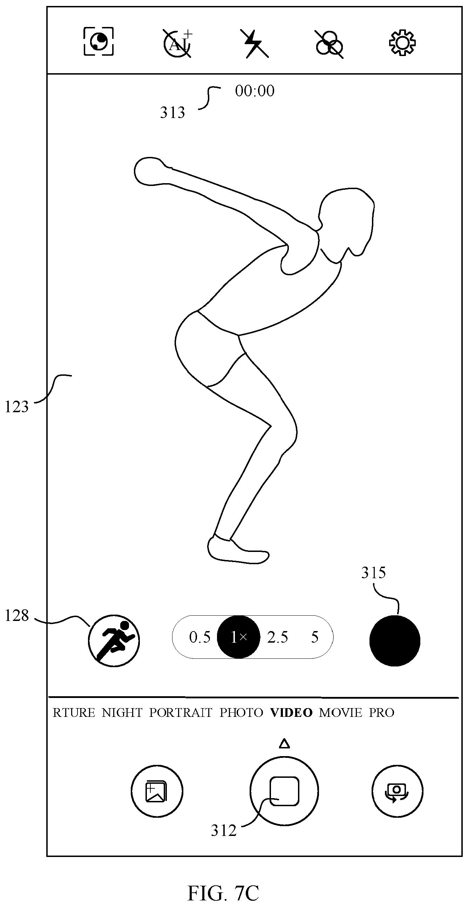

As shown in FIG. 7B, the electronic device 100 may detect a user operation performed on the video recording start control 311. In response to the foregoing operation, the electronic device 100 may start to record a video. Correspondingly, the electronic device 100 may display a video recording interface shown in FIG. 7C. The electronic device 100 may change the original video recording start control 311 to a video recording end control 312. In addition, the electronic device 100 may display a timestamp control 313 in the preview window 123, to indicate recorded duration. As shown in FIG. 7C, the video recording interface may further include a control 315. The control 315 may be configured to receive a shooting operation of the user in a video recording process, and trigger manual snapping.

FIG. 7C to FIG. 7G show examples of a group of video recording interfaces displayed by the electronic device 100 during recording of a long jumper. The preview window 123 may sequentially display motion states of the athlete shot by the camera at different moments in a long jump process. The timestamp control 313 may be updated as recording duration increases.

When starting to record the video, the electronic device 100 may determine an image window based on a fixed step size and determine a best frame in each window according to the method shown in FIG. 1.

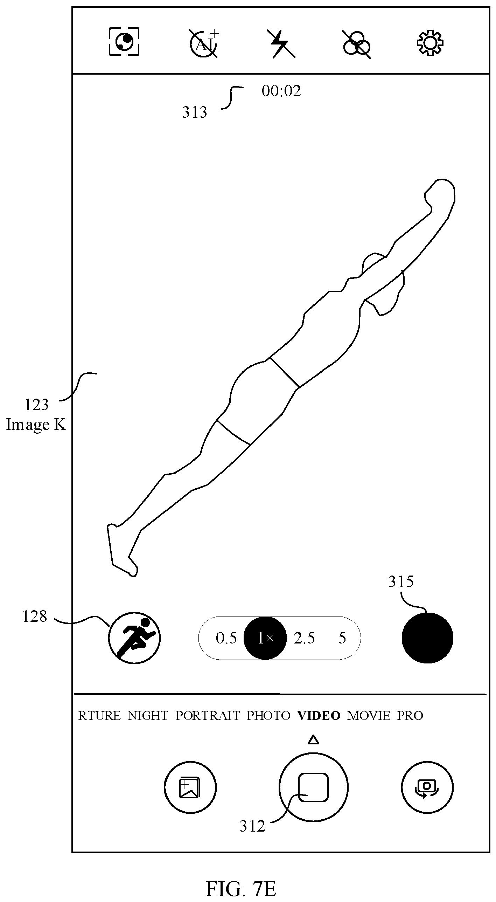

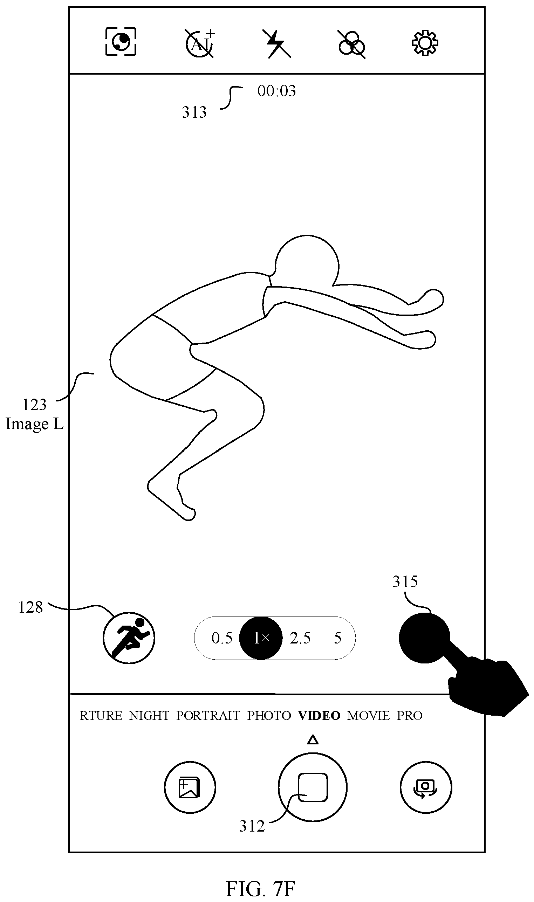

For example, when an interface shown in FIG. 7E is displayed, the user may determine that an image (an image K) displayed in the preview window 123 is wonderful. In this case, the user may determine to tap the control 315 to snap the image K in the video recording process. Similarly, due to a human reaction delay, the electronic device 100 receives, at a moment after the image K, a shooting operation performed by the user on the control 315. Refer to FIG. 7F. The electronic device 100 may receive, when displaying an image L, the shooting operation performed by the user on the control 315.

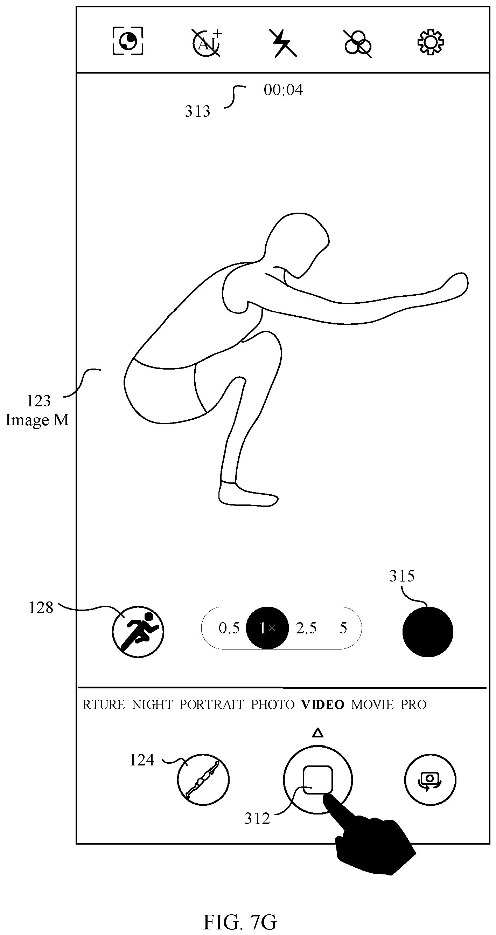

In response to the shooting operation, the electronic device 100 may generate a thumbnail based on a candidate frame before the shooting operation, and then display the thumbnail. For example, the electronic device 100 may determine the image K before the shooting operation as a candidate frame. In this case, with reference to FIG. 7G, the electronic device 100 may display a thumbnail of the image K in the playback control 124. In a scenario in which images generated by the camera in a period of time after the shooting operation are all poorer than the image K, the electronic device 100 may determine the image K as a finally shot photo. Correspondingly, the thumbnail of the image K displayed in the playback control 124 is not changed.

Similarly, with reference to FIG. 5F, when a best frame (for example, an image M) in the images generated by the camera in the period of time after the shooting operation is better than the image K, the electronic device 100 may determine the image M as a finally shot photo. Correspondingly, the thumbnail displayed in the playback control 124 may be updated to a thumbnail of the image M. Details are not described herein again.

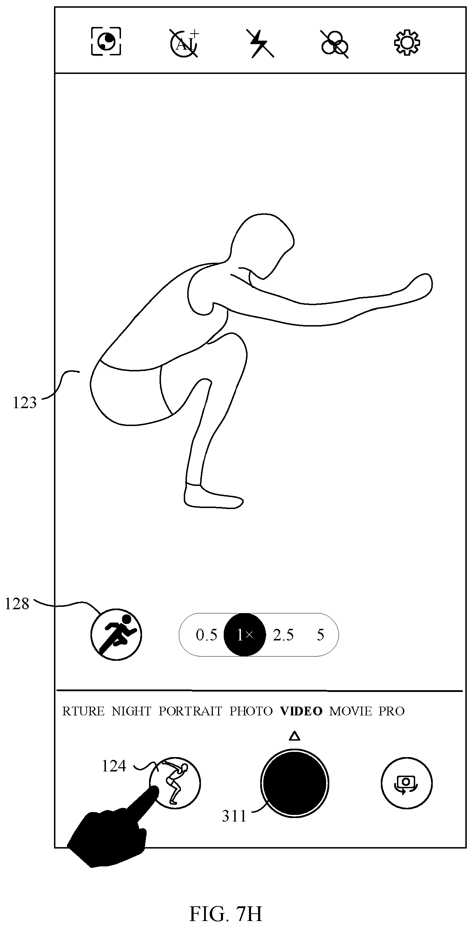

As shown in FIG. 7G, the electronic device 100 may detect a user operation performed on the video recording end control 312. In response to the foregoing operation, the electronic device 100 may end recording of the video, and display a user interface shown in FIG. 7H. As shown in FIG. 7H, the electronic device 100 may exit the video recording interface, and redisplay a preview interface, including redisplaying the video recording start control 311 to replace the video recording end control 312. In addition, the electronic device 100 may display a thumbnail of the newly recorded video in the playback control 124.

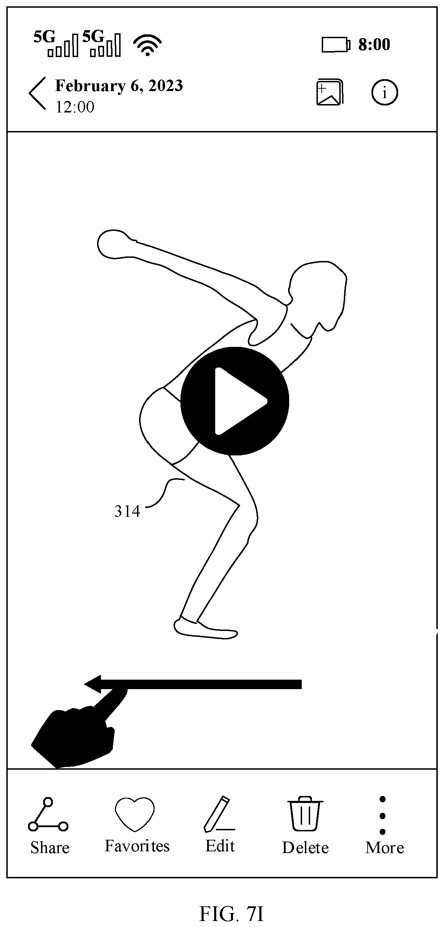

As shown in FIG. 7H, the electronic device 100 may detect a user operation performed on the playback control 124. In response to the foregoing operation, the electronic device 100 may display a user interface shown in FIG. 7I, to display the newly recorded video. As shown in FIG. 7H, the user may view complete content of the newly shot video by tapping a play button 314.

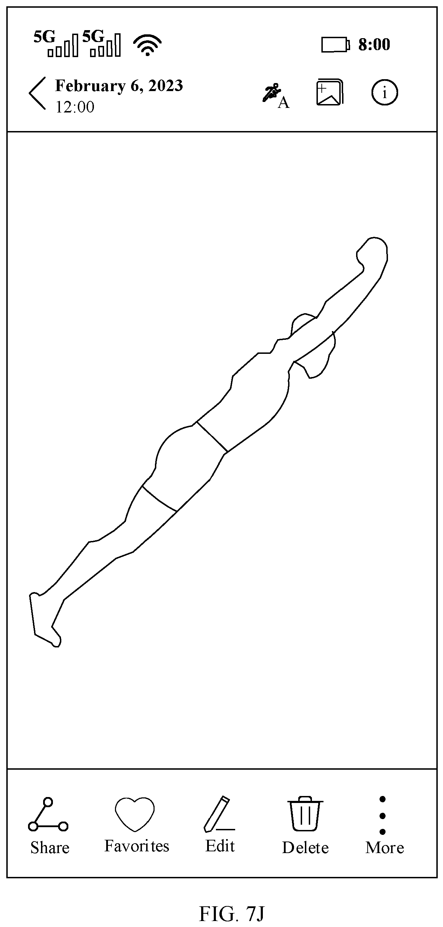

The electronic device 100 may further detect a leftward sliding operation performed on a screen. In response to the foregoing operation, the electronic device 100 may display a highlight photo snapped by the electronic device 100 by performing a manual snapping strategy in the foregoing video recording process. For example, with reference to FIG. 7J, the electronic device 100 may display a manually-snapped highlight photo, that is, the image K. It can be understood that the foregoing leftward sliding operation may alternatively be a rightward sliding operation. This is not limited herein.

In some embodiments, after video recording is started, a video recording interface may alternatively not include the playback control 124. After automatic snapping, the electronic device 100 does not display a thumbnail of a snapped photo in the video recording interface. After the video recording is ended, during viewing of a shot image, the electronic device 100 may display a photo automatically snapped in the foregoing video recording process.

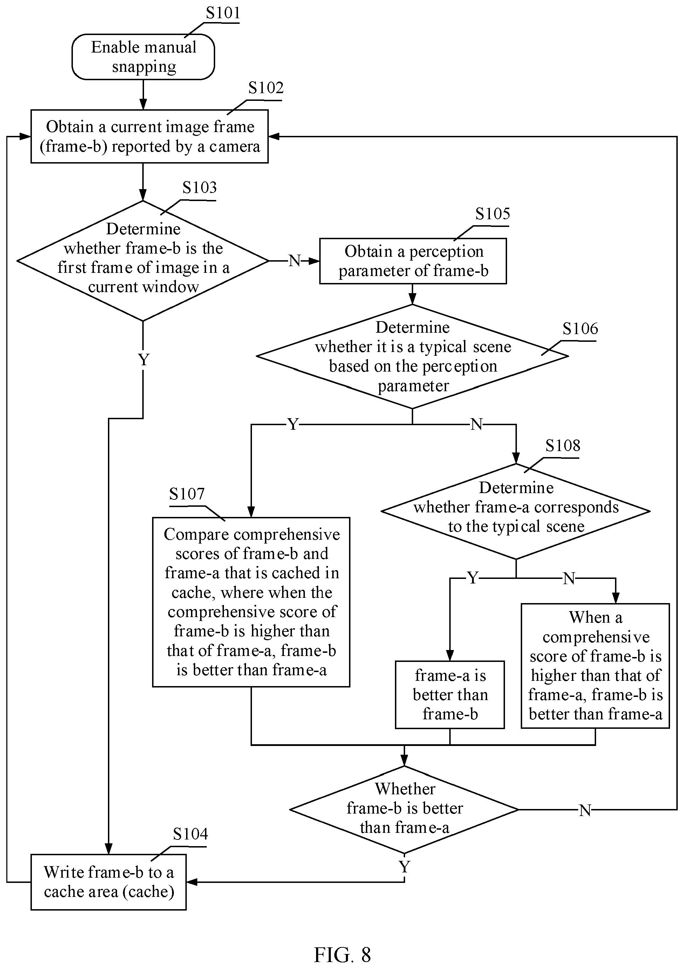

FIG. 8 is a flowchart of obtaining a best frame in a window according to an embodiment of this application.

S101: Enable manual snapping.

With reference to the user interface shown in FIG. 4B and FIG. 4C, the electronic device 100 may detect a user operation of enabling manual snapping. In response to the foregoing operation, the electronic device 100 may load program code corresponding to the manual snapping. After the manual snapping is enabled, the electronic device 100 may perform an operation shown in a subsequent step, to obtain a best frame in a window.

S102: Obtain a current frame (frame-b) reported by a camera.

The camera of the electronic device 100 may generate a RAW image in real time based on light within a framing range, and send the RAW image to an upper-layer application that invokes the camera, for example, a camera application. A frame rate of 30 fps is used as an example. The camera may report one frame of RAW image to the upper-layer application every 33.3 milliseconds (ms), that is, the upper-layer application may receive one frame of RAW image every 33.3 ms.

At a specific moment, the upper layer may receive one latest frame of RAW image reported by the camera, for example, an i^{th} frame of RAW image. Refer to FIG. 3A. After downsampling and splitting, the electronic device 100 may further obtain an i^{th} frame of Tiny image. The electronic device 100 may use the small-size Tiny image for processing and analysis, to reduce computing costs and improve processing efficiency. At this moment, the i^{th} frame of image (including the i^{th} frame of RAW image and the i^{th} frame of Tiny image) may be referred to as a current frame. The current frame may be denoted as frame-b. The electronic device 100 may use the i^{th} frame of Tiny image to perform an operation shown in a subsequent step.

S103: Determine whether frame-b is the first frame of image in a current window.

The electronic device 100 may determine a current window based on a frame number of frame-b, and determine whether frame-b is the first frame of image in the window. For example, the frame number of frame-b is 16. Based on a preset fixed step size 15 (frames), the electronic device 100 may determine that the current window is a window 2, and frame-b is the first frame of image in the window 2. For example, the frame number of frame-b is 20. Based on a preset fixed step size 15 (frames), the electronic device 100 may determine that the current window is a window 2, and frame-b is not the first frame of image in the window 2.

S104: Write frame-b to a cache area (cache).

A cache area (cache) is disposed in the electronic device 100, and cache may be configured to cache a best frame in a window. When frame-b is the first frame of image in the current window, the electronic device 100 may first directly write frame-b to cache.

S105: Obtain a perception parameter of frame-b.

If frame-b is not the first frame of image in the current window, it indicates that a frame of image that is relatively wonderful in the current window has been cached in cache. In this case, the electronic device 100 needs to determine whether frame-b is a more wonderful image. If frame-b is a more wonderful image, the electronic device 100 writes frame-b to cache, to replace the image previously cached in cache. In this way, after a window ends, an image cached in cache is a best frame in the window.

Specifically, the electronic device 100 may determine, based on the perception parameter, whether frame-b is a more wonderful image. The perception parameter includes data that is output by the perception module and that reflects image content and image quality, and includes interfaces output by various detection algorithms in the perception module and data that is reported by the camera and/or another sensor and that reflects image content and image quality. Refer to the descriptions of FIG. 3A. The data that is output by the perception module and that reflects image content and image quality includes: an object box output by the subject detection algorithm, an action score output by the action evaluation algorithm, a human face box output by the human face detection algorithm, a human face performance score output by the human face attribute algorithm, definition output by the definition algorithm, exposure reported by the camera and/or another sensor, and the like.

S106: Determine whether it is a typical scene based on the perception parameter.

A typical scene is a scene in which a preset specific object is shot. An object in an image in the typical scene includes the preset specific object. Specifically, the subject detection algorithm may identify whether the image includes the preset specific object, for example, a human, a cat, or a dog. When the foregoing specific object is identified, the subject detection algorithm may output an object box. In this case, the electronic device 100 may determine, according to whether the perception parameter includes an object box, whether frame-b is an image in a typical scene.

When the perception parameter obtained in S105 includes an object box, the electronic device 100 may determine that frame-b is an image in the typical scene. Conversely, when the perception parameter obtained in S105 does not include an object box, the electronic device 100 may determine that frame-b is not an image in the typical scene. Specifically, when the perception parameter does not include an object box, the action score output by the action evaluation algorithm is a null value, the human face detection algorithm does not output a human face box, and the human face performance score is also a null value.

S107: Compare comprehensive scores of frame-b and frame-a that is cached in cache, where when the comprehensive score of frame-b is higher than that of frame-a, frame-b is better than frame-a.

With reference to the descriptions of FIG. 3A, the electronic device 100 may determine, based on the perception parameter, a comprehensive score indicating a comprehensive evaluation of image content and image quality.

Specifically, when both frame-b and frame-a are images in the typical scene, the electronic device 100 may compare the comprehensive scores of frame-b and frame-a. When the comprehensive score of frame-b is higher than that of frame-a, the electronic device 100 may determine that frame-b is a more wonderful image. In this case, the electronic device 100 may perform the step shown in S104, to write frame-b to cache. In this case, the image cached in cache is updated to frame-b that is more wonderful. Conversely, when the comprehensive score of frame-b is lower than that of frame-a, the electronic device 100 does not write frame-b to cache, and the image cached in cache is still frame-a that is more wonderful than frame-b. In this way, when a window ends, an image cached in cache is a best frame in the window.

By default, an image in a typical scene is certainly better than an image in an atypical scene. Therefore, if frame-a is not an image in the typical scene, the electronic device 100 may directly determine that frame-b is a more wonderful image. Subsequently, the electronic device 100 may write frame-b to cache.

S108: Determine whether frame-a corresponds to the typical scene.

When frame-b is not an image in the typical scene, the electronic device 100 needs to first determine whether frame-a is an image in the typical scene. By default, a typical scene is better than an atypical scene. Therefore, when frame-a is an image in the typical scene, the electronic device 100 may directly determine that frame-a is better than frame-b.

If frame-a is also an image in an atypical scene, the electronic device 100 may compare comprehensive scores of frame-a and frame-b. However, in this case, various pieces of data indicating image content of frame-b and frame-a are all null values. For example, the subject detection algorithm does not output a valid object box, and in this case, there is no action score of an object, no valid human face box, and no human face performance score. When the comprehensive score of frame-b is higher than that of frame-a, the electronic device 100 may determine that frame-b is a more wonderful image. In this case, the electronic device 100 may perform the step shown in S 104, to write frame-b to cache. In this case, the image cached in cache is updated to frame-b that is more wonderful. Conversely, when the comprehensive score of frame-b is lower than that of frame-a, the electronic device 100 does not write frame-b to cache, and the image cached in cache is still frame-a that is more wonderful than frame-b.

S102 to S108 are repeated. After a window ends, an image cached in cache is a best frame in the window.

In the manual snapping method shown in FIG. 2, after detecting a shooting operation, the electronic device 100 obtains a first candidate frame before the shooting operation and a second candidate frame after the shooting operation by default, and then determines a more wonderful frame from the first candidate frame and the second candidate frame as a finally shot photo.

In some other embodiments, the electronic device 100 may identify, based on image content, whether a moment at which the shooting operation is performed is in a typical scene.

In a typical scene, the electronic device 100 may determine, according to the method shown in FIG. 2, a more wonderful image before and after the shooting operation, and output the image as a photo.

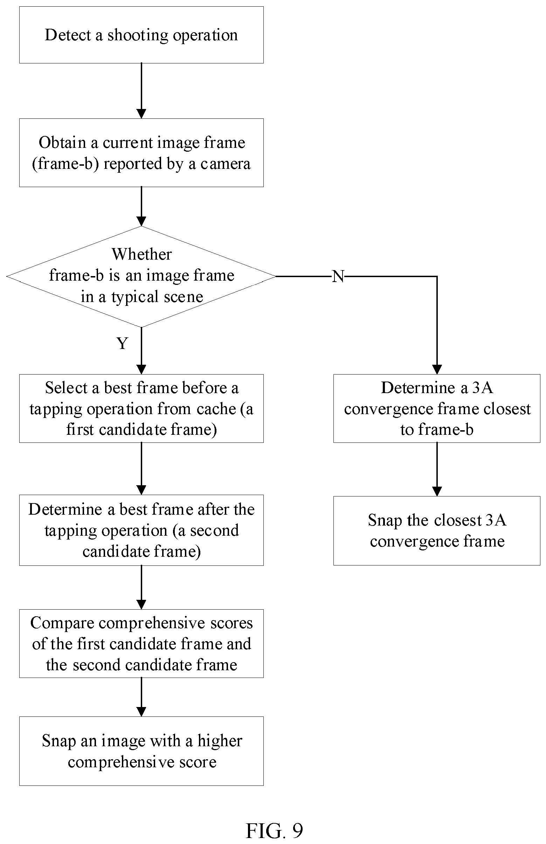

Conversely, in an atypical scene, as shown in FIG. 9, the electronic device 100 may search for only a 3A convergence frame closest to the moment at which the shooting operation is performed. 3A technologies include automatic focus (AF), automatic exposure (AE), and automatic white balance (AWB). The 3A convergence frame is an image that converges in AF, AE, and AWB.

With reference to FIG. 2, when detecting the shooting operation at the moment t, the electronic device 100 may first obtain a current frame corresponding to the moment t, for example, the 24^{th} frame of image (a third image) exemplified in FIG. 2, and then determine whether the current frame is an image in a typical scene, that is, whether the current frame includes a preset specific object (a first object). When the specific object is not included, the electronic device 100 may obtain a plurality of frames of images in a period of time that include the current frame, for example, the 19^{th} frame of image to the 29^{th} frame of image. Then, the electronic device 100 may determine, from the 19^{th} frame of image to the 29^{th} frame of image, a 3A convergence frame closest to the current frame (the 24^{th} frame of image), for example, the 20^{th} frame of image (a fourth image). The electronic device 100 may generate a photo based on the 20^{th} frame of image, and save the photo.

In this way, in the typical scene, the electronic device 100 may determine a most wonderful image near the shooting operation by comparing previous and next images, to ensure wonderfulness of a shot photo. In the atypical scene, the electronic device 100 may obtain an image with higher image quality at lower costs without a need to care about image content, to ensure timeliness of a shot photo, and reduce computing costs and power consumption.

In some embodiments, the electronic device 100 may further provide an automatic snapping function. Automatic snapping is a shooting method of identifying a magic moment in real time based on a preset algorithm in a preview process and outputting a highlight image frame of the magic moment as a highlight photo. A difference from manual snapping lies in that there is no need to pay attention to a shooting operation of the user in automatic snapping.

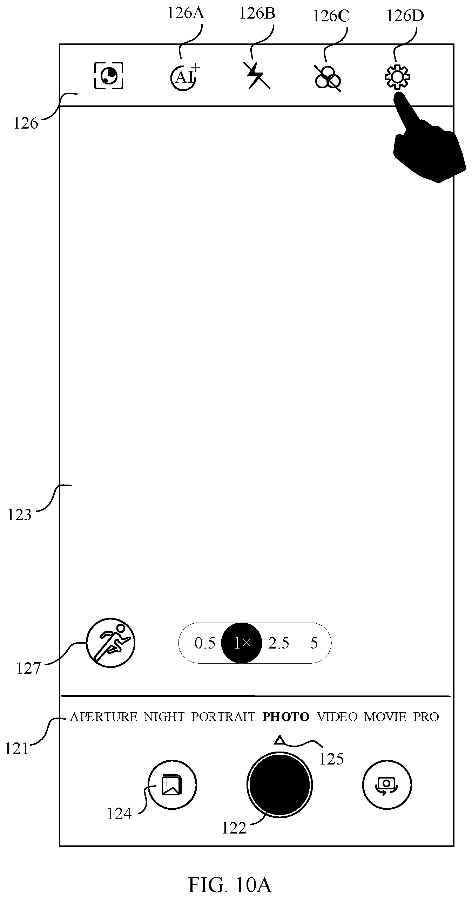

FIG. 10A to FIG. 10E are a group of user interfaces for enabling an automatic snapping function according to an embodiment of this application.

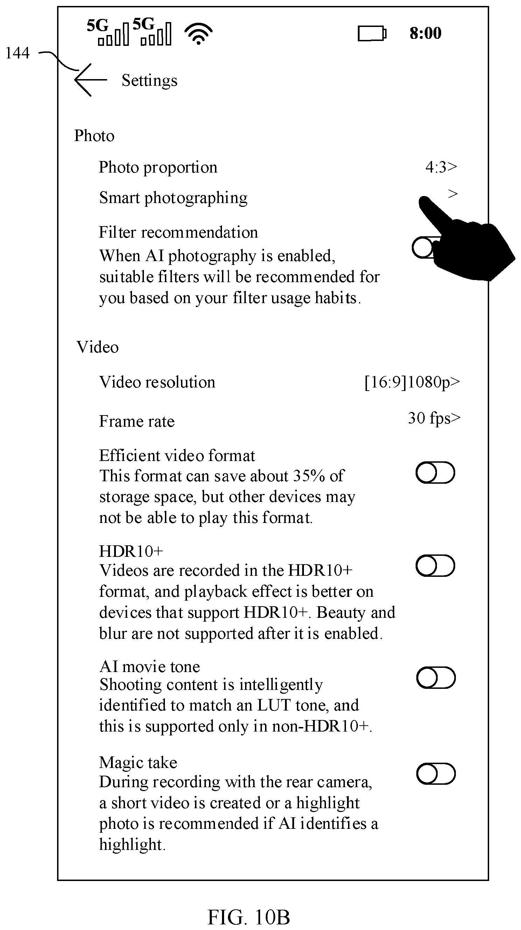

As shown in FIG. 10A, the electronic device 100 may detect a user operation performed on the control 126D. In response to the foregoing operation, the electronic device 100 may display a user interface shown in FIG. 10B.

The interface may display a plurality of function option controls, for example, "Photo proportion", "Smart photographing", "Video resolution", and "Frame rate". Examples are not enumerated herein. The "Photo proportion" control may be configured to set an aspect ratio of a shot photo, for example, 4:3 or 9:16. The "Smart photographing" control may be configured to set a special photo shooting manner, for example, voice control photographing in which photo shooting is controlled by using a voice, gesture control photographing in which photo shooting is controlled by using a gesture, and automatic snapping provided in this embodiment of this application. The "Video resolution" control may be configured to set a resolution of a video, for example, [16:9]1080p. The "Frame rate" control may be configured to set a frame rate of a video, for example, 30 fps.

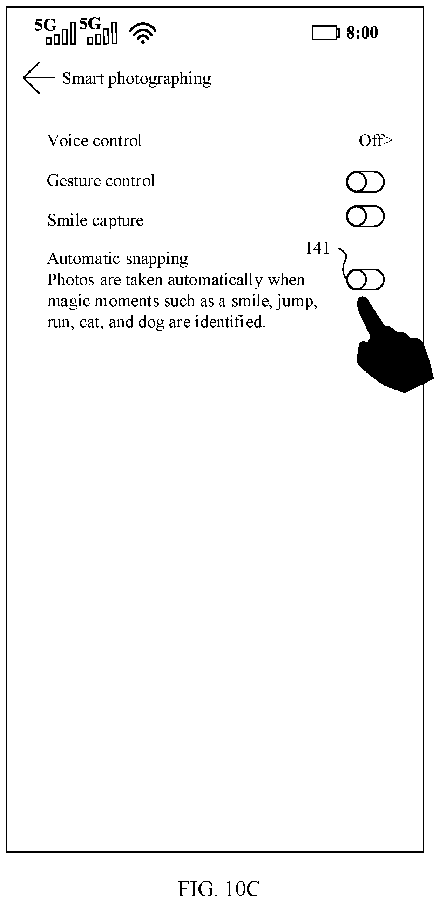

As shown in FIG. 10B, the electronic device 100 may detect a user operation performed by the user on the "Smart photographing" control. In response to the foregoing operation, the electronic device 100 may display a user interface shown in FIG. 10C.

The interface may display a plurality of function option controls in the "Smart photographing" directory, for example, "Voice control", "Gesture control", "Smile capture", and "Automatic snapping". The "Voice control" control may be configured to enable or disable voice control photographing, and "Gesture control" may be configured to enable or disable gesture control photographing. "Smile capture" may be configured to enable or disable smile capture. "Automatic snapping" may be configured to enable or disable automatic snapping provided in this embodiment of this application. Voice control photographing, gesture control photographing, smile capture, and a conventional shooting operation through a tap on the shooting control 122 are nonautomatic snapping. It can be understood that the manual snapping in this application is also a snapping operation performed in response to an operation of tapping the shooting control 122 by the user, a voice control operation, or the like, but is different from conventional photo shooting through a tap on the shooting control 122. The latter is conventional photo shooting performed based on a tap by the user on the shooting control 122, a corresponding image or a corresponding photo is obtained based on a moment of the tap, and during frame selection, an image frame closest to the moment of the tap is selected. The manual snapping in this application is performed based on a moment at which the user taps the shooting control 122, and one or more image frames are selected, according to a preset rule, from a plurality of image frames in a period of time before the moment and/or a period of time after the moment.

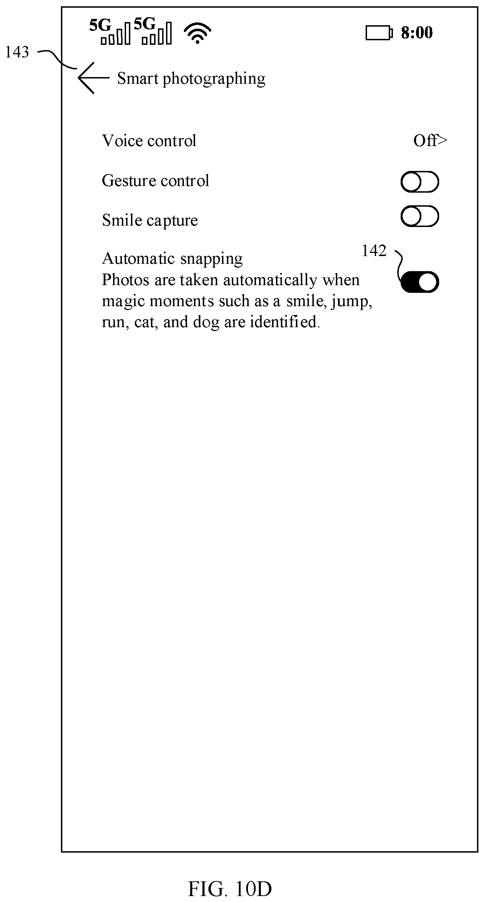

As shown in FIG. 10C, the electronic device 100 may detect a user operation performed by the user on a button 141. In response to the foregoing operation, the electronic device 100 may enable automatic snapping. The electronic device 100 may display a user interface shown in FIG. 10D. As shown in FIG. 10D, the original button 141 in FIG. 10C may be replaced with a button 142. The button 142 may be configured to disable the automatic snapping.

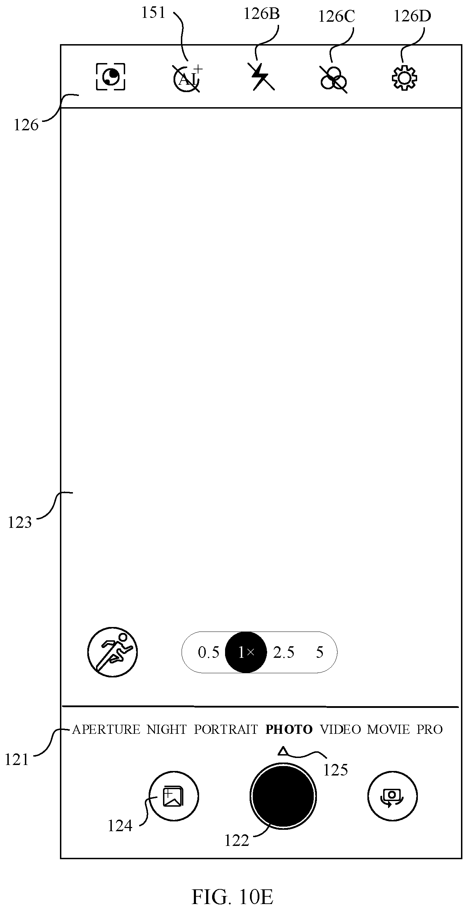

Then, the electronic device 100 may sequentially detect user operations performed on a control 143 and a control 144. In response to the foregoing operations, the electronic device 100 may redisplay a preview interface, with reference to FIG. 10E.

Similarly, if there is a function that conflicts with the automatic snapping, after the automatic snapping is enabled, the electronic device 100 may automatically disable the corresponding conflicting function. For example, the electronic device 100 may disable the AI photography after the automatic snapping is enabled. As shown in FIG. 10E, the electronic device 100 displays the control 151 to replace the original control 126A, to inform the user that the AI photography is disabled. Correspondingly, after the automatic snapping is disabled, the electronic device 100 may automatically enable the function that is previously disabled due to the conflict. For example, after the automatic snapping is disabled, the electronic device 100 may re-enable the AI photography.

After the automatic snapping is enabled, in a preview process, the electronic device 100 may identify, in real time, an image reported by the camera, and determine whether the image is wonderful. After a highlight image frame is identified, the electronic device 100 may automatically output the highlight image frame as a photo. The electronic device 100 may evaluate image content and image quality of each frame of image based on the perception module and the decision module shown in FIG. 3A, to determine whether the image is wonderful. When the decision module determines that a comprehensive score of an image satisfies a preset value, the decision module may determine the image as a highlight image frame.

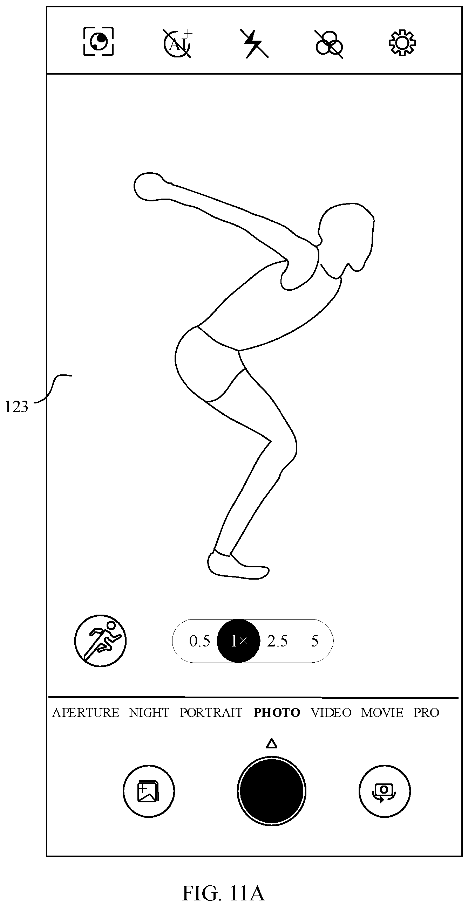

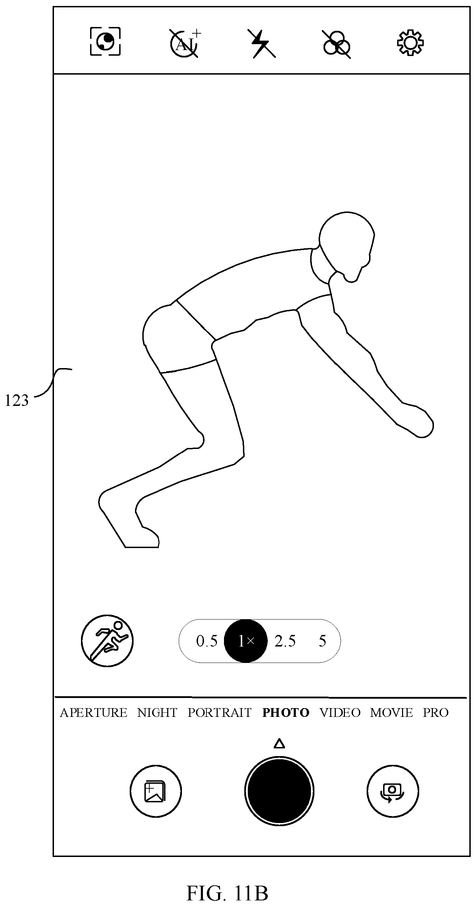

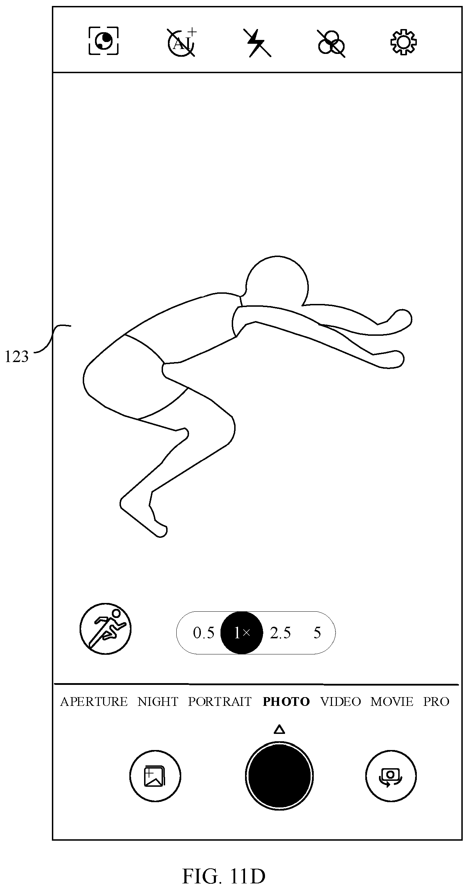

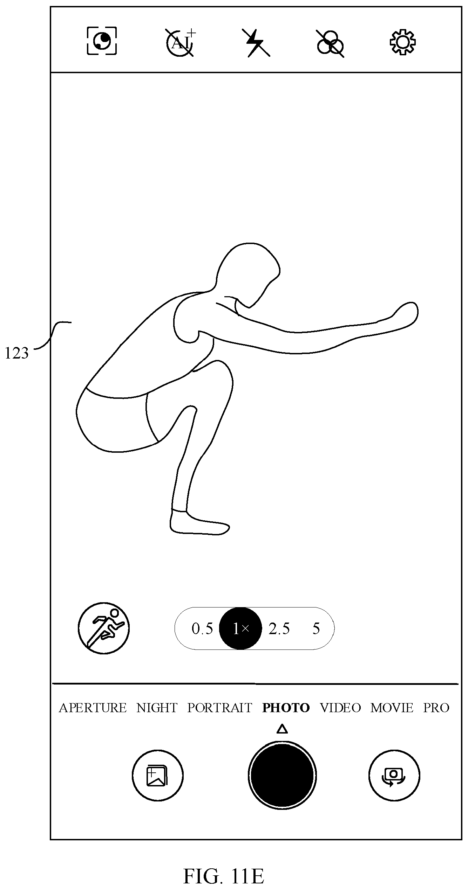

FIG. 11A to FIG. 11H are a group of user interfaces for implementing automatic snapping according to an embodiment of this application.

Shooting an athlete who is on a long jump is still used as an example. Refer to FIG. 11A to FIG. 11E. In a preview interface after the automatic snapping is enabled, the preview window 123 may sequentially display motion states of the athlete shot by the camera at different moments in a long jump process. In addition, with the use of the perception module and the decision module shown in FIG. 3A, the electronic device 100 may determine a comprehensive score of each frame of image in a shooting process, to determine whether each frame of image is wonderful.

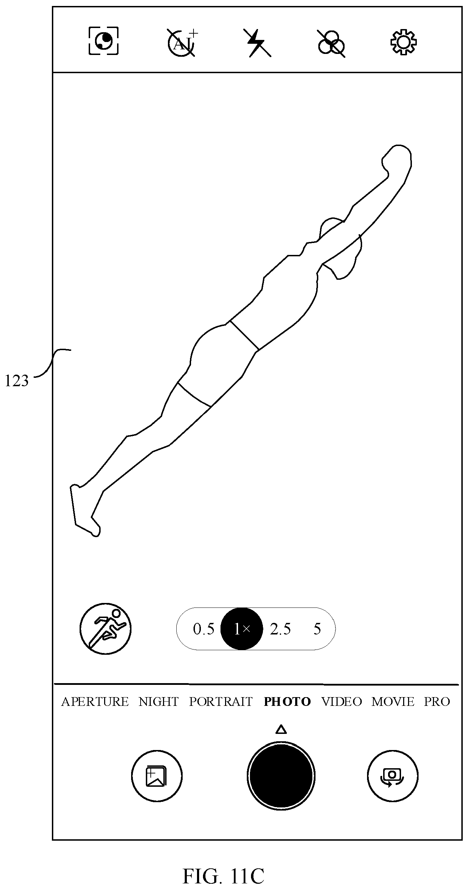

For example, during the long jump, a state in which the human is in a flat-plate shape after takeoff may be referred to as a best completion state of the long jump, that is, a state shown in the preview window 123 in FIG. 11C. In this case, a comprehensive score of a clear image (an image K) displayed in the preview window 123 in FIG. 11C is higher than a preset value. Therefore, the electronic device 100 may determine the image K as a highlight image frame. Subsequently, the electronic device 100 may generate a highlight photo shown in the image K and a corresponding thumbnail.

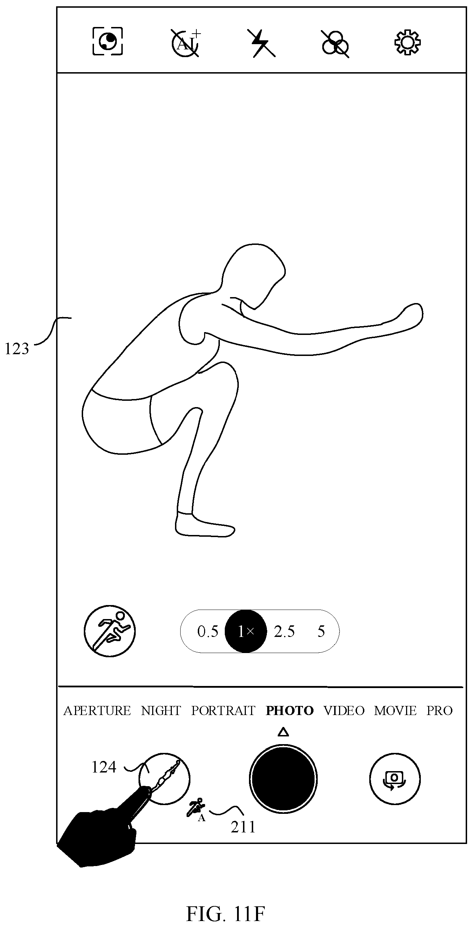

Refer to FIG. 11F. After the highlight photo and the thumbnail are obtained, the electronic device 100 may display the thumbnail in the playback control 124, to inform the user that a photo has been shot. Further, the electronic device 100 may display a prompt control, such as a control 211, near the thumbnail, to inform the user that the shot photo is a photo automatically snapped by the electronic device 100 and not shot by the user.

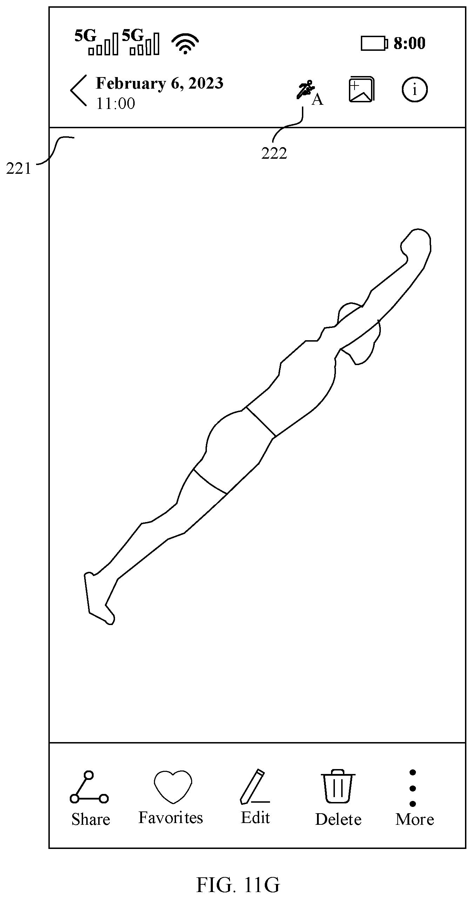

The electronic device 100 may detect a user operation performed on the playback control 124. In response to the foregoing operation, the electronic device 100 may display a user interface shown in FIG. 11G, to display a highlight photo corresponding to a thumbnail in the playback control 124.

As shown in FIG. 11G, the electronic device 100 may display, in the area 221, an automatically-snapped highlight photo (the image K). In this case, the user may view, in the area 221, the automatically-snapped highlight photo. The user interface may also include a prompt control, for example, a control 222. When viewing a shot photo, the user may determine, according to the foregoing control, that a currently displayed photo is a highlight photo automatically snapped by the electronic device 100 and not a photo shot by the user.

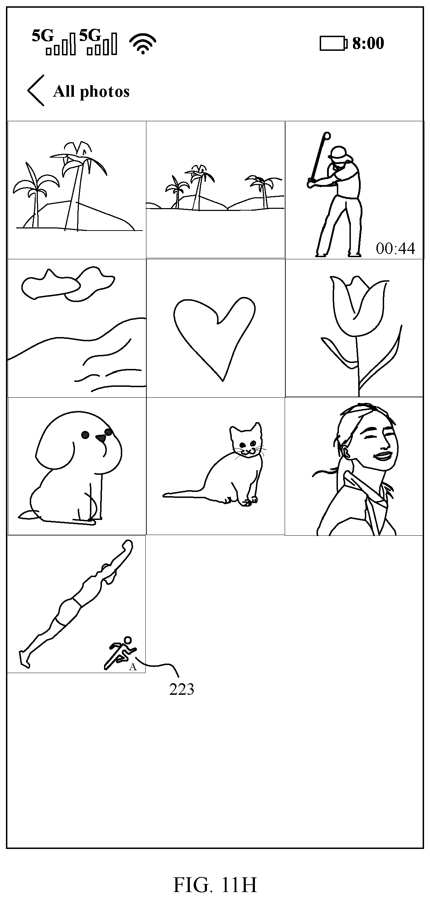

FIG. 11H is a user interface provided by the gallery application for previewing a shot image resource according to an embodiment of this application. In this interface, the electronic device 100 may further display a prompt control, such as a control 223, on a preview image of an automatically-snapped highlight photo. In this way, when the user views all shot photos, the user can distinguish between an automatically-snapped highlight photo and a photo shot by the user according to the prompt control.

In some scenarios, the user has opened the preview interface and is ready to shoot, but a magic moment is missed because the user forgets to tap the shooting control 122, or due to a reaction delay, a magic moment has passed when the user taps the shooting control 122. In these scenarios, a highlight photo cannot be obtained. In the foregoing method, after the automatic snapping is enabled, in a preview scenario, the electronic device 100 may automatically identify a magic moment, and snap a highlight photo. In this way, the electronic device 100 can assist the user in shooting, to prevent the user from missing the magic moment.

In some embodiments, in the "VIDEO" mode, the electronic device 100 may perform automatic snapping.

In some embodiments, starting from a first frame of the "VIDEO" mode to which the electronic device 100 switches, the electronic device 100 may obtain a magic moment and snap a highlight photo with reference to operations shown in FIG. 11A to FIG. 11F until the electronic device 100 switches to another mode that does not support automatic snapping or exits shooting.

In some other embodiments, after switching to the "VIDEO" mode and starting video recording, the electronic device 100 may obtain a magic moment and snap a highlight photo with reference to operations shown in FIG. 11A to FIG. 11F until the video recording is ended. In other words, in the "VIDEO" mode, the electronic device 100 does not perform automatic snapping in a time period in which video recording is not started.

Optionally, the electronic device 100 may simultaneously enable the manual snapping and the manual snapping. In some embodiments, when a time interval between a highlight image frame determined in manual snapping and a best frame determined in manual snapping is short, the electronic device 100 may save the manually-snapped best frame, and discard the manually-snapped highlight image frame.

Specifically, the electronic device 100 may set a time interval t (or a quantity of frames), for example, 1s (or 30 frames). If the time interval between the manually-snapped highlight image frame and the manually-snapped best frame is within 1s, the electronic device 100 may discard the manually-snapped highlight image frame. If the time interval between the manually-snapped highlight image frame and the manually-snapped best frame is greater than 1s, the electronic device 100 may save the manually-snapped highlight image frame and the manually-snapped best frame.

In this way, the electronic device 100 can avoid generating a photo that is very similar to a photo shot by the user, to avoid redundancy and a waste of storage resources.

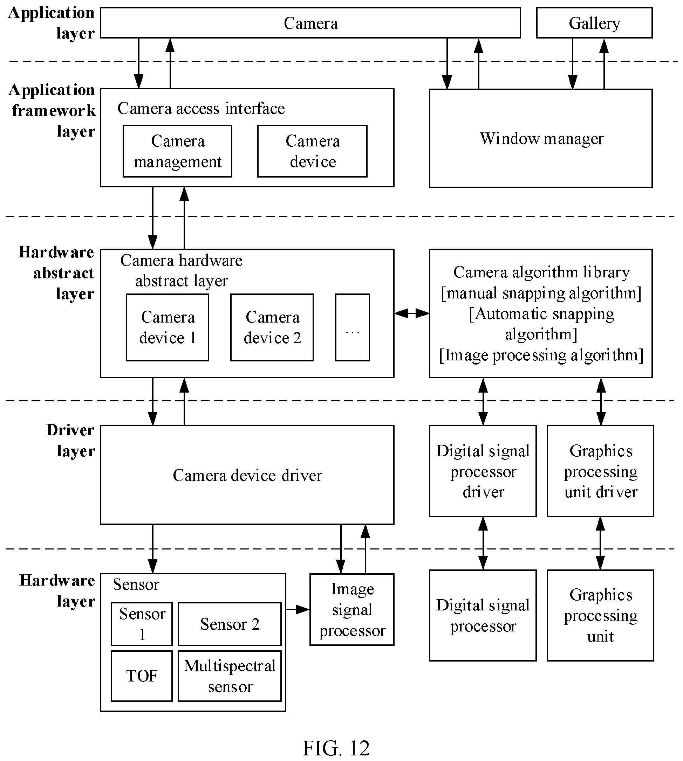

FIG. 12 is a schematic diagram of a system structure of an electronic device 100 according to an embodiment of this application.

A system of the electronic device 100 may use a layered architecture. As shown in FIG. 12, a system layer of the electronic device 100 includes an application layer, an application framework layer, a hardware abstract layer, a driver layer, and a hardware layer. The layers communicate with each other through a software interface.

The application layer may include a series of application packages. For example, the application packages may include a camera application, a gallery application, and the like.

The application framework layer provides an application programming interface (application programming interface, API) and a programming framework for applications at the application layer. The application framework layer includes some predefined functions. For example, the application framework layer may include a camera access interface. The camera access interface may include camera management and a camera device. The camera access interface is configured to provide an application programming interface and a programming framework for the camera application.

The hardware abstract layer is an interface layer located between the application framework layer and the driver layer, and provides a virtual hardware platform for an operating system. For example, the hardware abstract layer may include a camera hardware abstract layer and a camera algorithm library. The camera hardware abstract layer may provide virtual hardware for a camera device 1 (a first camera), a camera device 2 (a second camera), or more camera devices. The camera algorithm library stores a plurality of types of image processing algorithms. For example, in this embodiment of this application, the camera algorithm library may include a manual snapping algorithm, an automatic snapping algorithm, an image processing algorithm, and the like. The manual snapping algorithm and the automatic snapping algorithm include a perception algorithm required to implement manual snapping/automatic snapping, for example, the subject detection algorithm, the action evaluation algorithm, the human face detection algorithm, the human face attribute algorithm, and the definition algorithm shown in FIG. 3A.

The driver layer is a layer between hardware and software. The driver layer includes various hardware drivers. For example, the driver layer may include a camera device driver, a digital signal processor driver, a graphics processing unit driver, and the like. The camera device driver is configured to drive a sensor of a camera to capture an image, and drive an image signal processor to preprocess the image. The digital signal processor driver is configured to drive a digital signal processor to process an image. The graphics processing unit driver is configured to drive a graphics processing unit to process an image.

In this embodiment of this application, after a user operation of starting the camera application (a user operation performed on the camera application icon 113G shown in FIG. 4A) is detected, the camera application invokes the camera access interface at the application framework layer, to start the camera application. Then, a camera device at the camera hardware abstract layer, for example, the camera device 1, is invoked, to send an instruction for starting the camera application, and the camera hardware abstract layer sends the instruction to the camera device driver at the driver layer. The camera device driver may start a sensor corresponding to the camera device, for example, a sensor 1. Then, the sensor is used to collect an image light signal, and the image light signal is transmitted to the image signal processor for preprocessing, to obtain a RAW image. The original stream is transmitted to the camera hardware abstract layer through the camera device driver.

The camera hardware abstract layer may send the RAW image stream to the camera algorithm library. On the basis of support of the digital signal processor and the graphics processing unit, the camera algorithm library may downsample the RAW image stream, to obtain a low-resolution processing stream (a Tiny stream).

Then, on the basis of support of the digital signal processor and the graphics processing unit, the camera algorithm library may invoke perception algorithms such as the subject detection algorithm, the action evaluation algorithm, the human face detection algorithm, the human face attribute algorithm, and the definition algorithm, to obtain various data evaluating image content and image quality.

In manual snapping, based on the foregoing data and data reported by the camera and/or another sensor, the camera algorithm library may determine a best frame in a window, and then report a best frame event to the HAL. In automatic snapping, based on the foregoing data and data reported by the camera and/or another sensor, the camera algorithm library may determine whether an image satisfies a preset condition, to determine whether the image is wonderful. After a highlight image frame is identified, the camera algorithm library may report an automatic snapping event to the HAL.

In the manual snapping, after the best frame event is received, the HAL may obtain, based on a frame number carried in the event, a corresponding image frame from the received RAW image stream, and cache the image frame to a dedicated buffer. After a shooting operation is detected, the HAL obtains a best frame that is best from a dedicated buffer and outputs the best frame as a highlight photo. In this process, the HAL may further invoke the camera algorithm library to perform other image processing, for example, a saturation optimization algorithm, an exposure compensation algorithm, and a face/body beautifying algorithm, on a highlight image frame that triggers automatic snapping, so as to obtain an image with a better effect.

In the automatic snapping, after the automatic snapping event is received, the HAL may obtain, based on a frame number carried in the event, a corresponding image frame from the received RAW image stream, and then output the image frame as a highlight photo.

After the photo and a thumbnail of the photo are generated, the HAL may return the image data to the camera application through the camera access interface. Subsequently, the camera application and the gallery application may display the shot photo to a user with the support of a window manager.

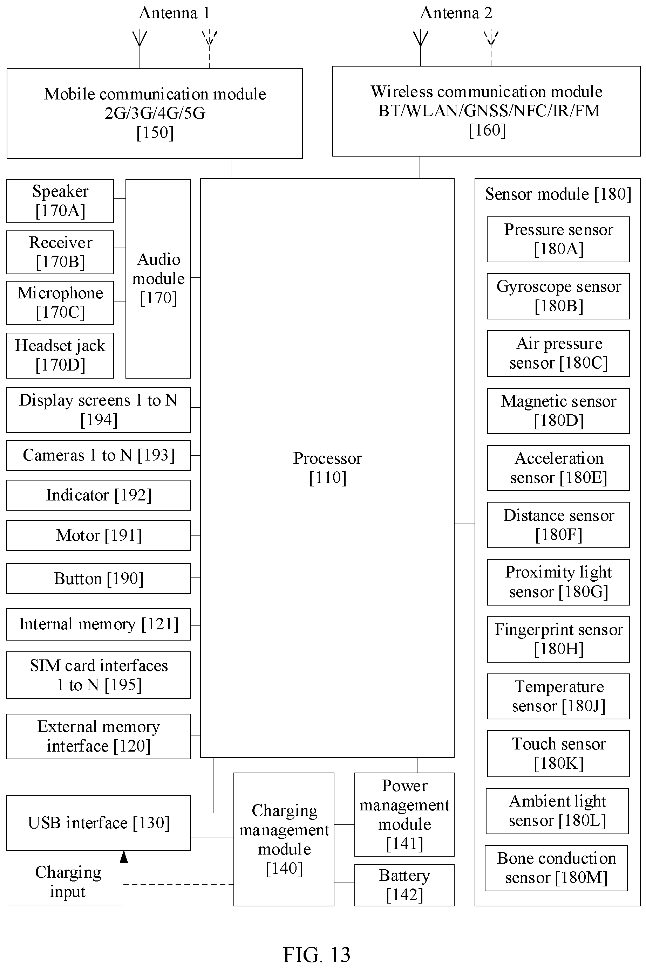

FIG. 13 is a schematic diagram of a structure of an electronic device 100 according to an embodiment of this application.

The electronic device 100 may include a processor 110, an external memory interface 120, an internal memory 129, a universal serial bus (universal serial bus, USB) interface 130, a charging management module 140, a power management module 145, a battery 146, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, an air pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It can be understood that the structure illustrated in embodiments of the present invention does not constitute a specific limitation on the electronic device 100. In some other embodiments of this application, the electronic device 100 may include more or fewer components than those shown in the figure, or combine some components, or split some components, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may generate an operation control signal based on instruction operation code and a time sequence signal, to complete control of instruction fetching and instruction execution. A memory may be further disposed in the processor 110, and is configured to store an instruction and data.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through an I2C interface, so that the processor 110 communicates with the touch sensor 180K through the I2C bus interface, to implement a touch function of the electronic device 100.

The MIPI interface may be configured to connect the processor 110 to a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display screen 194 through the DSI interface, to implement a display function of the electronic device 100.

The USB interface 130 is an interface that complies with a USB standard specification, and may be specifically a mini USB interface, a micro USB interface, a USB Type-C interface, or the like. The USB interface 130 may be configured to connect to a charger to charge the electronic device 100, or may be used for data transmission between the electronic device 100 and a peripheral device. The interface may alternatively be configured to connect to a headset, to play audio through the headset. The interface may alternatively be configured to connect to another electronic device, for example, an AR device.

It can be understood that an interface connection relationship between the modules shown in this embodiment of the present invention is merely an example for description, and does not constitute a limitation on the structure of the electronic device 100. In some other embodiments of this application, the electronic device 100 may use an interface connection manner different from that in the foregoing embodiments, or use combinations of a plurality of interface connection manners.

The charging management module 140 is configured to receive a charging input from the charger. When charging the battery 146, the charging management module 140 may further supply power to the electronic device by using the power management module 145.

The power management module 145 is configured to connect to the battery 146, the charging management module 140, and the processor 110. The power management module 145 receives an input from the battery 146 and/or the charging management module 140 and supplies power to the processor 110, the internal memory 129, the display screen 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The electronic device 100 may implement a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that perform program instructions to generate or change display information.

The display screen 194 is configured to display an image, a video, or the like. The display screen 194 includes a display panel. The display screen 194 includes a display panel. A liquid crystal display (liquid crystal display, LCD) may be used as the display panel. The display panel may alternatively be manufactured by using an organic light-emitting diode (organic light-emitting diode, OLED), an active-matrix organic light-emitting diode (active-matrix organic light emitting diode, AMOLED), a flex light-emitting diode (flex light-emitting diode, FLED), a mini-LED, a micro-LED, a micro-OLED, a quantum dot light-emitting diode (quantum dot light emitting diodes, QLED), or the like. In some embodiments, the electronic device may include 1 or N display screens 194, where N is a positive integer greater than 1.

In this embodiment of this application, the electronic device 100 may display the user interface shown in FIG. 4A to FIG. 4C, FIG. 5A to FIG. 5H, FIG. 6A to FIG. 6D, FIG. 7A to FIG. 7J, FIG. 10A to FIG. 10E, and FIG. 11A to FIG. 11H by using a display function provided by devices such as the GPU, the display screen 194, and the application processor.

The electronic device 100 may implement a shooting function by using the ISP, the camera 193, the video codec, the GPU, the display screen 194, the application processor, and the like.

The ISP is configured to process data fed back by the camera 193. For example, during photo shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include 1 or N cameras 193, where N is a positive integer greater than 1.

The video codec is configured to compress or decompress a digital video. The electronic device 100 may support one or more types of video codecs. In this case, the electronic device 100 may play or record videos in a plurality of coding formats, such as moving picture experts group (moving picture experts group, MPEG)1, MPEG2, MPEG3, and MPEG4.

In this embodiment of this application, the electronic device 100 may obtain an image by using a shooting function provided by the ISP, the camera 193, the video codec, the GPU, the display screen 194, the application processor, and the like, to implement manual snapping and/or automatic snapping.

The internal memory 129 may include one or more random access memories (random access memory, RAM) and one or more non-volatile memories (non-volatile memory, NVM). The random access memory may be directly read and written by the processor 110, may be configured to store an executable program (for example, a machine instruction) of an operating system or another running program, and may be configured to store data of a user and an application, and the like. The non-volatile memory may also store the executable program, the data of the user and the application, and the like, which may be loaded into the random access memory in advance for the processor 110 to perform direct reading and writing.

In this embodiment of this application, computer program code corresponding to manual snapping and/or automatic snapping may be stored in the NVM. When manual snapping or automatic snapping or both are enabled, the corresponding program code may be mounted to the RAM. The processor 110 may directly read the program code in the RAM to implement manual snapping and/or automatic snapping. Image files such as a highlight photo obtained through manual snapping and/or automatic snapping and a thumbnail of the photo may be written to the NVM for saving, so that the user can read and view the image file at any time.

The external memory interface 120 may be configured to connect to an external non-volatile memory, to expand a storage capability of the electronic device 100. The external non-volatile memory communicates with the processor 110 through the external memory interface 120, to implement a data storage function. For example, the image files such as the highlight photo obtained through manual snapping and/or automatic snapping and the thumbnail of the photo are stored in the external non-volatile memory.

The electronic device 100 may implement an audio function by using the audio module 170, the speaker 170A, the receiver 170B, the microphone 170C, the headset jack 170D, the application processor, and the like. For example, after a camera application is started, the camera application may invoke the audio module 170 to obtain an ambient audio signal, which is combined with an image stream generated by a device such as the camera to form a video.

The pressure sensor 180A is configured to sense a pressure signal, and may convert the pressure signal into an electrical signal. In some embodiments, the pressure sensor 180A may be disposed on the display screen 194. When a touch operation is performed on the display screen 194, the electronic device 100 detects intensity of the touch operation based on the pressure sensor 180A. The electronic device 100 may further calculate a touch position based on a detection signal of the pressure sensor 180A.

The gyroscope sensor 180B may be configured to detect angular velocity of the electronic device 100 in various directions (usually, on three axes). The acceleration sensor 180E may detect accelerations of the electronic device 100 in various directions. The gyroscope sensor 180B and the acceleration sensor 180E may be configured to determine a motion posture of the electronic device 100. In this embodiment of this application, data reported by the acceleration sensor 180E and the gyroscope sensor 180B may be used to determine a motion state of the device, to assist in determining whether an image at a corresponding moment has problems of jitter, ghosting, and the like.

The air pressure sensor 180C is configured to measure an air pressure. The magnetic sensor 180D includes a Hall effect sensor. The electronic device 100 may detect opening and closing of a flip cover by using the magnetic sensor 180D. The distance sensor 180F is configured to measure a distance. In a shooting scene, the electronic device 100 may measure a distance by using the distance sensor 180F, to implement quick focusing. The proximity light sensor 180G may be configured to determine whether there is an object near the electronic device 100. When insufficient reflected light is detected, the electronic device 100 may determine that there is no object near the electronic device 100. The ambient light sensor 180L is configured to perceive ambient light brightness. The electronic device 100 may adaptively adjust brightness of the display screen 194 based on the perceived ambient light brightness. In a shooting scene, the ambient light sensor 180L may be further configured to automatically adjust white balance during photo shooting. The fingerprint sensor 180H is configured to collect a fingerprint. The temperature sensor 180J is configured to detect a temperature. The bone conduction sensor 180M may obtain a vibration signal.

The touch sensor 180K is also referred to as a "touch device". The touch sensor 180K may be disposed on the display screen 194, and the touch sensor 180K and the display screen 194 form a touchscreen, which is also referred to as a "touch screen". The touch sensor 180K is configured to detect a touch operation on or near the touch sensor. The touch sensor may transfer the detected touch operation to the application processor to determine a type of the touch event. A visual output related to the touch operation may be provided by using the display screen 194. In some other embodiments, the touch sensor 180K may alternatively be disposed on a surface of the electronic device 100, at a position different from that of the display screen 194.

In this embodiment of this application, the electronic device 100 may identify, by using a touch detection function provided by the touch sensor 180K, whether there is a touch operation performed on the screen, a position of the operation on the screen, and a type of the operation, to implement user interface switching and display the user interfaces shown in FIG. 4A to FIG. 4C, FIG. 5A to FIG. 5H, FIG. 6A to FIG. 6D, FIG. 7A to FIG. 7J, FIG. 10A to FIG. 10E, and FIG. 11A to FIG. 11H, so that the user obtains a manual snapping/automatic snapping service.

The button 190 includes a power on/off button, a volume button, and the like. The electronic device 100 may receive a button input and generate a button signal input related to a user setting and function control of the electronic device 100. The motor 191 may generate a vibration prompt. The indicator 192 may be an indicator light. The SIM card interface 195 is configured to connect to a SIM card.

The term "user interface (user interface, UI)" in this specification, claims, and accompanying drawings of this application is a medium interface for interaction and information exchange between an application or an operating system and a user. The user interface implements conversion between an internal form of information and a form acceptable to the user. A user interface of an application is source code written in a specific computer language such as Java or extensible markup language (extensible markup language, XML). The interface source code is parsed and rendered on a terminal device, and finally presented as content that can be recognized by a user, for example, a control such as a picture, a text, or a button. A control (control), also referred to as a widget (widget), is a basic element of a user interface. Typical controls include a toolbar (toolbar), a menu bar (menu bar), a text box (text box), a button (button), a scrollbar (scrollbar), a picture, and a text. Attributes and content of controls in an interface are defined by tags or nodes. For example, in XML, controls included in an interface are defined by nodes such as <Textview>, <ImgView>, and <VideoView>. A node corresponds to a control or an attribute in an interface. The node is presented as content visible to a user after being parsed and rendered. In addition, interfaces of many applications, for example, a hybrid application (hybrid application), generally include a web page. A web page, also referred to as a page, may be understood as a special control embedded in an application interface. The web page is source code written in a specific computer language, such as hypertext markup language (hyper text markup language, HTML), cascading style sheets (cascading style sheets, CSS), or JavaScript (JavaScript, JS). The web page source code may be loaded and displayed by a browser or a web page display component with similar functions to the browser as content that can be recognized by a user. Specific content included in the web page is also defined by tags or nodes in the web page source code. For example, in HTML, elements and attributes of the web page are defined by <p>, <img>, <video>, and <canvas>.

A common representation form of the user interface is a graphical user interface (graphic user interface, GUI), which is a graphically displayed user interface related to a computer operation. The graphical user interface may be an interface element such as an icon, a window, or a control that is displayed on a display screen of an electronic device. The control may include visible interface elements such as an icon, a button, a menu, a tab, a text box, a dialog box, a status bar, a navigation bar, and a widget.

As used in the specification and the claims of this application, the singular expressions "one", "a", "an", and "this" are also intended to include plural expressions, unless otherwise specified in the context clearly. It should be further understood that the term "and/or" used in this application indicates and includes any or all possible combinations of one or more listed items. As used in the foregoing embodiments, based on the context, the term "when" may be interpreted as a meaning of "if", "after", "in response to determining", or "in response to detecting". Similarly, based on the context, the phrase "when it is determined" or "if it (the described condition or event) is detected" may be interpreted as a meaning of "if it is determined", "in response to determining", "when it (the described condition or event) is detected", or "in response to detecting (the described condition or event)".

All or some of the foregoing embodiments may be implemented by software, hardware, firmware, or any combination thereof. When software is used to implement embodiments, all or some of the embodiments may be implemented in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the method in the foregoing embodiments may be implemented by a computer program instructing related hardware. The program may be stored in a computer-readable storage medium. When the program is executed, procedures of the foregoing method embodiments may be included. The storage medium includes any medium that can store program code, such as a ROM, a random access memory RAM, a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A shooting method, applied to an electronic device, wherein the electronic device comprises a camera, and the method comprises:
starting a camera application;
displaying a preview interface at a moment T1, wherein the preview interface comprises a preview area and a thumbnail area, and an image captured by the camera in real time is displayed in the preview area;
before detecting a shooting operation at a moment T2, selecting a first best frame with a highest comprehensive score from images captured by the camera from a moment T3 to a moment T4, wherein the moment T3 and the moment T4 are after the moment T1 and before the moment T2, and the moment T3 and the moment T4 are determined after the moment T1 based on a time window of a fixed step size;
detecting the shooting operation at the moment T2;
selecting, in response to the shooting operation, a second best frame with a highest comprehensive score from images captured by the camera from the moment T4 to the moment T2;
determining a frame with a higher comprehensive score from the first best frame and the second best frame as a first image;
displaying a thumbnail of a first photo in the thumbnail area in response to the shooting operation, wherein the first photo is obtained based on the first image; and
displaying a thumbnail of a second photo in the thumbnail area in response to the shooting operation, wherein the second photo is obtained based on the first image and
a second image, and the second image is an image with a highest comprehensive score captured by the camera at a moment that is after the moment T2 and that does not comprise the moment T2;
wherein a comprehensive score of an image is determined based on one or more of the following: a quantity, sizes, and/or positions of first objects, a completion degree of a first action of a shot object, a quantity, sizes, and/or positions of human faces, a degree of a smile on a human face, an opening degree of an eye on a human face, image definition, or exposure.

2. The method according to claim 1, wherein before the displaying a thumbnail of a second photo in the thumbnail area, the method further comprises:
detecting a first operation performed on the thumbnail of the first photo;
displaying a second interface in response to the first operation, wherein the second interface comprises a third area, and the first photo is displayed in the third area; and
replacing the displayed first photo with the second photo in the third area.

3. The method according to claim 1 or 2, wherein the method further comprises:
starting a gallery application, and displaying a third interface, wherein one or more images are displayed in the third interface, and the one or more images comprise a preview image of the second photo and do not comprise a preview image of the first photo.

4. The method according to any one of claims 1 to 3, wherein the preview interface further comprises a second control, and the method further comprises: detecting a user operation performed on the second control, and enabling a manual snapping function.

5. The method according to any one of claims 1 to 4, wherein
the comprehensive score of the second image is higher than the comprehensive score of the first image.

6. The method according to claim 5, wherein
a difference between the comprehensive score of the second image and the comprehensive score of the first image is greater than a first preset value.

7. The method according to claim 5, wherein the displaying a thumbnail of a second photo in the thumbnail area in response to the shooting operation, wherein the second photo is obtained based on a second image specifically comprises:
selecting a second candidate frame with a highest comprehensive score from images captured by the camera from the moment T2 to a moment T5; and
determining that the comprehensive score of the second candidate frame is higher than that of the first candidate frame, wherein the second image is the second candidate frame.

8. The method according to claim 7, wherein a time length corresponding to the moment T2 to the moment T5 is the same as or different from a time length corresponding to the moment T3 to the moment T4.

9. The method according to any one of claims 1 to 8, wherein before the displaying a thumbnail of a first photo in the thumbnail area in response to the shooting operation, the method further comprises: determining that a third image comprises the first object, wherein the third image is an image displayed in the preview area when the electronic device detects the shooting operation.

10. The method according to claim 9, wherein the method further comprises:
displaying a thumbnail of a fourth photo in the thumbnail area when the third image does not comprise the first object, wherein the fourth photo is obtained based on a fourth image, the fourth image is a convergence image closest to the third image, and the convergence image satisfies one or more of the following: automatic focus convergence, automatic exposure convergence, or automatic white balance convergence.

11. The method according to any one of claims 1 to 10, wherein that the first photo is obtained based on a first image specifically comprises:
obtaining a plurality of frames of images that are captured by the camera and that comprise the first image; and
fusing the plurality of frames of images into a new image, wherein the first photo is obtained based on the new image.

12. The method according to claim **11,** wherein before the obtaining a plurality of frames of images that are captured by the camera and that comprise the first image, the method further comprises: starting a night mode.

13. An electronic device, comprising a camera,
one or more processors and one or more memories, wherein the one or more memories are coupled to the one or more processors, the one or more memories are configured to store computer program code, the computer program code comprises computer instructions, and when the one or more processors execute the computer instructions, the method according to any one of claims 1 to 12 is performed.

14. A computer-readable storage medium, comprising instructions, wherein when the instructions are run on an electronic device comprising a camera, the method according to any one of claims 1 to 12 is performed.

## Patentansprüche

1. Aufnahmeverfahren, angewendet auf eine elektronische Vorrichtung, wobei die elektronische Vorrichtung eine Kamera umfasst und das Verfahren Folgendes umfasst:
Starten einer Kameraanwendung;
Anzeigen einer Vorschauschnittstelle zu einem Zeitpunkt T1, wobei die Vorschauschnittstelle einen Vorschau-Bereich und einen Miniaturansicht-Bereich umfasst, und ein von der Kamera in Echtzeit aufgenommenes Bild in dem Vorschau-Bereich angezeigt wird;
vor dem Erkennen eines Aufnahmevorgangs zu einem Zeitpunkt T2, Auswählen eines ersten besten Einzelbildes mit einem höchsten Gesamtscore aus den von der Kamera von einem Zeitpunkt T3 bis zu einem Zeitpunkt T4 aufgenommenen Bildern, wobei der Zeitpunkt T3 und der Zeitpunkt T4 nach dem Zeitpunkt T1 und vor dem Zeitpunkt T2 liegen, und der Zeitpunkt T3 sowie der Zeitpunkt T4 nach dem Zeitpunkt T1 basierend auf einem Zeitfenster einer festen Schrittweite bestimmt werden;
Erkennen des Aufnahmevorgangs zum Zeitpunkt T2;
Auswählen, als Reaktion auf den Aufnahmevorgang, eines zweiten besten Einzelbildes mit einem höchsten Gesamtscore aus den von der Kamera vom Zeitpunkt T4 bis zum Zeitpunkt T2 aufgenommenen Bildern;
Bestimmen eines Einzelbildes mit einem höheren Gesamtscore aus dem ersten besten Einzelbild und dem zweiten besten Einzelbild als ein erstes Bild;
Anzeigen einer Miniaturansicht eines ersten Fotos im Miniaturansicht-Bereich als Reaktion auf den Aufnahmevorgang, wobei das erste Foto basierend auf dem ersten Bild erhalten wird; und
Anzeigen einer Miniaturansicht eines zweiten Fotos im Miniaturansicht-Bereich als Reaktion auf den Aufnahmevorgang, wobei das zweite Foto basierend auf dem ersten Bild und einem zweiten Bild erhalten wird, und das zweite Bild ein Bild mit einem höchsten Gesamtscore ist, das von der Kamera zu einem Zeitpunkt aufgenommen wurde, der nach dem Zeitpunkt T2 liegt und den Zeitpunkt T2 nicht umfasst;
wobei ein Gesamtscore eines Bildes basierend auf einem oder mehreren der folgenden Punkte bestimmt wird: eine Anzahl, Größen und/oder Positionen von ersten Objekten, ein Vervollständigungsgrad einer ersten Aktion eines aufgenommenen Objekts, eine Anzahl, Größen und/oder Positionen von menschlichen Gesichtern, ein Grad des Lächelns auf einem menschlichen Gesicht, ein Öffnungsgrad eines Auges auf einem menschlichen Gesicht, Bildschärfe oder Belichtung.

2. Verfahren nach Anspruch 1, wobei vor dem Anzeigen einer Miniaturansicht eines zweiten Fotos im Miniaturansicht-Bereich das Verfahren ferner umfasst:
Erkennen einer ersten Operation, die an der Miniaturansicht des ersten Fotos durchgeführt wird;
Anzeigen einer zweiten Schnittstelle als Reaktion auf die erste Operation, wobei die zweite Schnittstelle einen dritten Bereich umfasst und das erste Foto im dritten Bereich angezeigt wird; und
Ersetzen des angezeigten ersten Fotos durch das zweite Foto im dritten Bereich.

3. Verfahren nach Anspruch 1 oder 2, wobei das Verfahren ferner umfasst:
Starten einer Galerieanwendung und Anzeigen einer dritten Schnittstelle, wobei ein oder mehrere Bilder in der dritten Schnittstelle angezeigt werden und das eine oder die mehreren Bilder ein Vorschaubild des zweiten Fotos umfassen und kein Vorschaubild des ersten Fotos umfassen.

4. Verfahren nach einem der Ansprüche 1 bis 3, wobei die Vorschauschnittstelle ferner ein zweites Steuerelement umfasst und das Verfahren ferner umfasst: Erkennen einer auf dem zweiten Steuerelement ausgeführten Benutzeraktion und Aktivieren einer manuellen Auslösefunktion.

5. Verfahren nach einem der Ansprüche 1 bis 4, wobei
die Gesamtpunktzahl des zweiten Bildes höher ist als die Gesamtpunktzahl des ersten Bildes.

6. Verfahren nach Anspruch 5, wobei
eine Differenz zwischen der Gesamtpunktzahl des zweiten Bildes und der Gesamtpunktzahl des ersten Bildes größer als ein erster voreingestellter Wert ist.

7. Verfahren nach Anspruch 5, wobei das Anzeigen einer Miniaturansicht eines zweiten Fotos im Miniaturansichtsbereich als Reaktion auf den Aufnahmevorgang, wobei das zweite Foto basierend auf einem zweiten Bild erhalten wird, spezifisch umfasst:
Auswählen eines zweiten Kandidatenrahmens mit einer höchsten Gesamtpunktzahl aus Bildern, die von der Kamera vom Zeitpunkt T2 bis zu einem Zeitpunkt T5 aufgenommen wurden; und
Bestimmen, dass die Gesamtpunktzahl des zweiten Kandidatenrahmens höher ist als die des ersten Kandidatenrahmens, wobei das zweite Bild der zweite Kandidatenrahmen ist.

8. Verfahren nach Anspruch 7, wobei eine Zeitdauer, die dem Zeitpunkt T2 bis zum Zeitpunkt T5 entspricht, gleich oder unterschiedlich zu einer Zeitdauer ist, die dem Zeitpunkt T3 bis zum Zeitpunkt T4 entspricht.

9. Verfahren nach einem der Ansprüche 1 bis 8, wobei vor dem Anzeigen einer Miniaturansicht eines ersten Fotos im Miniaturansichtsbereich als Reaktion auf den Aufnahmevorgang das Verfahren ferner umfasst: Bestimmen, dass ein drittes Bild das erste Objekt umfasst, wobei das dritte Bild ein Bild ist, das im Vorschaubereich angezeigt wird, wenn die elektronische Vorrichtung den Aufnahmevorgang erkennt.

10. Verfahren nach Anspruch 9, wobei das Verfahren ferner umfasst:
Anzeigen einer Miniaturansicht eines vierten Fotos im Miniaturansichtsbereich, wenn das dritte Bild das erste Objekt nicht umfasst, wobei das vierte Foto basierend auf einem vierten Bild erhalten wird, das vierte Bild ein Konvergenzbild ist, das dem dritten Bild am nächsten liegt, und das Konvergenzbild eines oder mehrere der folgenden erfüllt: automatische Fokuskonvergenz, automatische Belichtungskonvergenz oder automatische Weißabgleichkonvergenz.

11. Verfahren nach einem der Ansprüche 1 bis 10, wobei das erste Foto basierend auf einem ersten Bild erhalten wird, insbesondere umfassend:
Erhalt einer Vielzahl von durch die Kamera aufgenommenen Einzelbildern, die das erste Bild umfassen; und
Zusammenführen der Vielzahl von Einzelbildern zu einem neuen Bild, wobei das erste Foto basierend auf dem neuen Bild erhalten wird.

12. Verfahren nach Anspruch 11, wobei vor dem Erhalt einer Vielzahl von durch die Kamera aufgenommenen Einzelbildern, die das erste Bild umfassen, das Verfahren ferner umfasst: Starten eines Nachtmodus.

13. Elektronische Vorrichtung, umfassend eine Kamera, einen oder mehrere Prozessoren und einen oder mehrere Speicher, wobei der eine oder die mehreren Speicher mit dem einen oder den mehreren Prozessoren gekoppelt sind, wobei der eine oder die mehreren Speicher dazu konfiguriert sind, Computerprogrammcode zu speichern, wobei der Computerprogrammcode Computeranweisungen umfasst und, wenn der eine oder die mehreren Prozessoren die Computeranweisungen ausführen, das Verfahren nach einem der Ansprüche 1 bis 12 durchgeführt wird.

14. Computerlesbares Speichermedium, umfassend Anweisungen, wobei, wenn die Anweisungen auf einer elektronischen Vorrichtung ausgeführt werden, die eine Kamera umfasst, das Verfahren nach einem der Ansprüche 1 bis 12 durchgeführt wird.

## Revendications

1. Procédé de prise de vue, appliqué à un dispositif électronique, dans lequel le dispositif électronique comprend un appareil photo, et le procédé comprend :
le lancement d'une application d'appareil photo ;
l'affichage d'une interface de prévisualisation à un instant T1, dans laquelle l'interface de prévisualisation comprend une zone de prévisualisation et une zone de vignettes, et une image capturée par l'appareil photo en temps réel est affichée dans la zone de prévisualisation ;
avant de détecter une opération de prise de vue à un instant T2, la sélection d'une première meilleure image ayant un score global le plus élevé parmi les images capturées par l'appareil photo d'un instant T3 à un instant T4, dans laquelle l'instant T3 et l'instant T4 sont après l'instant T1 et avant l'instant T2, et l'instant T3 et l'instant T4 sont déterminés après l'instant T1 sur la base d'une fenêtre temporelle d'une taille de pas fixe ;
la détection de l'opération de prise de vue à l'instant T2 ;
la sélection, en réponse à l'opération de prise de vue, d'une deuxième meilleure image ayant un score global le plus élevé parmi les images capturées par l'appareil photo de l'instant T4 à l'instant T2 ;
la détermination d'une image ayant un score global plus élevé parmi la première meilleure image et la deuxième meilleure image en tant que première image ;
l'affichage d'une vignette d'une première photo dans la zone de vignettes en réponse à l'opération de prise de vue, dans laquelle la première photo est obtenue sur la base de la première image ; et
l'affichage d'une vignette d'une deuxième photo dans la zone de vignettes en réponse à l'opération de prise de vue, dans laquelle la deuxième photo est obtenue sur la base de la première image et d'une deuxième image, et la deuxième image est une image ayant un score global le plus élevé capturée par l'appareil photo à un instant qui est après l'instant T2 et qui ne comprend pas l'instant T2 ;
dans lequel un score global d'une image est déterminé sur la base d'un ou plusieurs des éléments suivants : une quantité, des tailles et/ou des positions de premiers objets, un degré d'achèvement d'une première action d'un objet photographié, une quantité, des tailles et/ou des positions de visages humains, un degré de sourire sur un visage humain, un degré d'ouverture d'un œil sur un visage humain, une définition d'image, ou une exposition.

2. Procédé selon la revendication 1, dans lequel avant l'affichage d'une vignette d'une deuxième photo dans la zone de vignettes, le procédé comprend en outre :
la détection d'une première opération effectuée sur la vignette de la première photo ;
l'affichage d'une deuxième interface en réponse à la première opération, dans laquelle la deuxième interface comprend une troisième zone, et la première photo est affichée dans la troisième zone ; et
le remplacement de la première photo affichée par la deuxième photo dans la troisième zone.

3. Procédé selon la revendication 1 ou 2, dans lequel le procédé comprend en outre :
lancer une application de galerie et afficher une troisième interface, dans laquelle une ou plusieurs images sont affichées dans la troisième interface, et les une ou plusieurs images comprennent une image de prévisualisation de la deuxième photo et ne comprennent pas d'image de prévisualisation de la première photo.

4. Procédé selon l'une quelconque des revendications 1 à 3, dans lequel l'interface de prévisualisation comprend en outre une seconde commande, et le procédé comprend en outre : détecter une opération utilisateur effectuée sur la seconde commande, et activer une fonction de capture manuelle.

5. Procédé selon l'une quelconque des revendications 1 à 4, dans lequel
le score global de la deuxième image est supérieur au score global de la première image.

6. Procédé selon la revendication 5, dans lequel
une différence entre le score global de la deuxième image et le score global de la première image est supérieure à une première valeur prédéfinie.

7. Procédé selon la revendication 5, dans lequel l'affichage d'une vignette d'une deuxième photo dans la zone de vignettes en réponse à l'opération de prise de vue, dans lequel la deuxième photo est obtenue sur la base d'une deuxième image, comprend spécifiquement :
sélectionner une deuxième image candidate ayant le score global le plus élevé parmi les images capturées par la caméra de l'instant T2 à un instant T5 ; et
déterminer que le score global de la deuxième image candidate est supérieur à celui de la première image candidate, dans lequel la deuxième image est la deuxième image candidate.

8. Procédé selon la revendication 7, dans lequel une durée correspondant à l'instant T2 à l'instant T5 est identique ou différente d'une durée correspondant à l'instant T3 à l'instant T4.

9. Procédé selon l'une quelconque des revendications 1 à 8, dans lequel avant l'affichage d'une vignette d'une première photo dans la zone de vignettes en réponse à l'opération de prise de vue, le procédé comprend en outre : déterminer qu'une troisième image comprend le premier objet, dans lequel la troisième image est une image affichée dans la zone de prévisualisation lorsque le dispositif électronique détecte l'opération de prise de vue.

10. Procédé selon la revendication 9, dans lequel le procédé comprend en outre :
afficher une vignette d'une quatrième photo dans la zone de vignettes lorsque la troisième image ne comprend pas le premier objet, dans lequel la quatrième photo est obtenue sur la base d'une quatrième image, la quatrième image est une image de convergence la plus proche de la troisième image, et l'image de convergence satisfait à une ou plusieurs des conditions suivantes : convergence de mise au point automatique, convergence d'exposition automatique ou convergence de balance des blancs automatique.

11. Procédé selon l'une quelconque des revendications 1 à 10, dans lequel le fait que la première photo est obtenue sur la base d'une première image comprend spécifiquement :
l'obtention d'une pluralité de trames d'images qui sont capturées par la caméra et qui comprennent la première image ; et
la fusion de la pluralité de trames d'images en une nouvelle image, dans laquelle la première photo est obtenue sur la base de la nouvelle image.

12. Procédé selon la revendication 11, dans lequel avant l'obtention d'une pluralité de trames d'images qui sont capturées par la caméra et qui comprennent la première image, le procédé comprend en outre : le démarrage d'un mode nuit.

13. Dispositif électronique, comprenant une caméra, un ou plusieurs processeurs et une ou plusieurs mémoires, dans lequel les une ou plusieurs mémoires sont couplées aux un ou plusieurs processeurs, les une ou plusieurs mémoires sont configurées pour stocker un code de programme informatique, le code de programme informatique comprend des instructions informatiques, et lorsque les un ou plusieurs processeurs exécutent les instructions informatiques, le procédé selon l'une quelconque des revendications 1 à 12 est mis en œuvre.

14. Support de stockage lisible par ordinateur, comprenant des instructions, dans lequel lorsque les instructions sont exécutées sur un dispositif électronique comprenant une caméra, le procédé selon l'une quelconque des revendications 1 à 12 est mis en œuvre.
